# EUROPEAN PATENT APPLICATION

(11) **EP 4 679 253 A1**
(43) Date of publication of application: **14.01.2026**
(21) Application number: 24823555.8
(22) Date of filing: 19.04.2024
(51) Int. Cl.: G06F 3/14, G06F 3/048, G06Q 50/10, G06F 3/00, G06F 1/26, H04W 4/80, G01R 31/382, H04L 9/08, G06F 3/0484, G06F 3/0481

(54) **ELECTRONIC DEVICE AND METHOD FOR DISPLAYING MEDIA CONTENT ON DISPLAY**

(30) Priority: 13.06.2023 KR 20230075853; 11.07.2023 KR 20230089717; 22.12.2023 KR 20230190536; 26.02.2024 KR 20240027574
(71) Applicant: Samsung Electronics Co., Ltd., Suwon-si, Gyeonggi-do 16677 (KR)
(72) Inventor: LEE, Seungyong, Suwon-si, Gyeonggi-do 16677 (KR); KIM, Minho, Suwon-si, Gyeonggi-do 16677 (KR); RYU, Jooyeol, Suwon-si, Gyeonggi-do 16677 (KR)
(74) Representative: HGF
(86) International application number: PCT/KR2024/005326
(87) International publication number: WO 2024/258034

(57) **Abstract**

Disclosed is an electronic device. The electronic device can obtain an input for displaying content. The electronic device can identify a right to use the content through information about the right to use the content on the basis of obtaining the input for displaying the content. The electronic device, in response to identifying that the right to use the content exists, can control a PMIC to supply power to a second display to display the content. The electronic device can control the second display to display the content through the second display while the power is being supplied. The electronic device can control the PMIC to stop supplying power to the second display on the basis of the content being displayed on the second display.

## Description

### [Technical Field]

The present disclosure relates to an electronic device and a method for displaying media content on a display.

### [Background Art]

Recently, the spread of various types of portable electronic devices such as a smartphone, a tablet PC, a wireless earphone, and a smart watch is expanding. Some of the portable electronic devices may include an electronic paper display. The electronic paper display may include an electro-phoretic display, an electro-chromic display (ECD), and/or a twist-ball display.

### [Disclosure]

### [Technical Solution]

An electronic device is disclosed. The electronic device may comprise a housing. The electronic device may comprise a first display disposed on a front side of the housing. The electronic device may comprise a second display disposed on an area of a rear side of the housing. The electronic device may comprise a power management integrated circuit (PMIC) for controlling power supplied to the second display. The electronic device may comprise communication circuitry communicating with a server managing usage rights of visual contents. The electronic device may comprise a secure element (SE) storing information about the usage rights of the visual contents. The electronic device may comprise memory storing instructions. The electronic device may comprise at least one processor. The instructions, when executed by the at least one processor, individually or collectively, may cause the electronic device to obtain information about usage rights of contents in which the usage rights are set from the server via the communication circuitry. The instructions, when executed by the at least one processor, individually or collectively, may cause the electronic device to obtain an input for displaying the contents. The instructions, when executed by the at least one processor, individually or collectively, may cause the electronic device to, in a case of obtaining the input for displaying the contents, identify usage rights for the contents based on the information about the usage rights. The instructions, when executed by the at least one processor, individually or collectively, may cause the electronic device to, in response to identifying that usage rights for the contents exist, control the PMIC to supply power to the second display. The instructions, when executed by the at least one processor, individually or collectively, may cause the electronic device to control the second display to display the content via the second display while the power is supplied. The instructions, when executed by the at least one processor, individually or collectively, may cause the electronic device to, based on display of the content by the second display being completed, control the PMIC to cease supplying power to the second display.

An electronic device is disclosed. The electronic device may comprise a housing. The electronic device may comprise a first display disposed on a front side of the housing. The electronic device may comprise a second display disposed on an area of a rear side of the housing. The electronic device may comprise a power management integrated circuit (PMIC) for controlling power supplied to the second display. The electronic device may comprise memory storing instructions. The electronic device may comprise at least one processor. The instructions, when executed by the at least one processor, individually or collectively, may cause the electronic device to identify a location of the electronic device. The instructions, when executed by the at least one processor, individually or collectively, may cause the electronic device to identify that the identified location of the electronic device enters a designated area. The instructions, when executed by the at least one processor, individually or collectively, may cause the electronic device to, based on identifying that the designated area is entered, select content set for the designated area from among a plurality of contents stored in the memory. The instructions, when executed by the at least one processor, individually or collectively, may cause the electronic device to control the PMIC to supply power to the second display. The instructions, when executed by the at least one processor, individually or collectively, may cause the electronic device to control the second display to display the content via the second display while the power is supplied. The instructions, when executed by the at least one processor, individually or collectively, may cause the electronic device to, based on display of the content by the second display being completed, control the PMIC to cease supplying power to the second display.

An electronic device is disclosed. The electronic device may comprise a first housing including a first side and a second side opposite the first side, a first display disposed on the first side, a second display disposed on the second side, communication circuitry, memory for storing instructions, and a processor. The processor may be configured to, when the instructions are executed, while temporarily refraining from transmitting a power signal to a third display after displaying media content on the second display, identify a contact between at least a portion of the electronic device and at least a portion of an external electronic device. The processor may be configured to, when the instructions are executed, based on identifying the contact between the at least a portion of the electronic device and at the least a portion of the external electronic device, from the external electronic device, using the communication circuitry, receive a signal requesting display of the media content on at least one display of the external electronic device corresponding to the third display. The processor may be configured to, when the instructions are executed, based on receiving the signal, using a secure element stored in the memory, encrypt the media content to transmit the media content to the external electronic device. The processor may be configured to, when the instructions are executed, transmit the encrypted media content to the external electronic device through the communication circuitry.

A method is disclosed. The method may be performed by an electronic device including a housing, a first display disposed on a front side of the housing, a second display disposed on an area of a rear side of the housing, a power management integrated circuit (PMIC) for controlling power supplied to the second display, communication circuitry communicating with a server managing usage rights of visual contents, and a secure element (SE) storing information about usage rights of visual contents. The method may comprise obtaining information about usage rights of contents in which the usage rights are set from the server via the communication circuitry. The method may comprise obtaining an input for displaying the contents. The method may comprise, in a case of obtaining the input for displaying the contents, identifying usage rights for the contents via the information about the usage rights. The method may comprise, in response to identifying that usage rights for the contents exist to the user, controlling the PMIC to supply power to the second display. The method may comprise controlling the second display to display the visual content via the second display while the power is supplied. The method may comprise, based on display of the visual content by the second display being completed, controlling the PMIC to cease supplying power to the second display.

A method is disclosed. The method may be performed by an electronic device including a housing, a first display disposed on a front side of the housing, a second display disposed on an area of a rear side of the housing, and a power management integrated circuit (PMIC) for controlling power supply to the second display. The method may comprise identifying a location of the electronic device. The method may comprise identifying that the identified location of the electronic device enters a designated area. The method may comprise, based on identifying that the designated area is entered, selecting content set for the designated area from among a plurality of contents stored in the memory. The method may comprise controlling the PMIC to supply power to the second display. The method may comprise controlling the second display to display the content via the second display while the power is supplied. The method may comprise, based on display of the visual content by the second display being completed, controlling the PMIC to cease supplying power to the second display.

### [Description of the Drawings]

FIG. 1A illustrates an example of a block diagram of an electronic device according to an embodiment.
FIG. 1B illustrates an example of an electronic device of a first type according to an embodiment.
FIG. 1C illustrates an example of an electronic device of a second type according to an embodiment.
FIG. 1D illustrates an example of an electronic device of a third type according to an embodiment.
FIG. 2A illustrates an example of a visual object displayed on an electronic paper display after boot up of an electronic device of a first type is completed according to an embodiment.
FIG. 2B illustrates an example of a visual object displayed on an electronic paper display after boot up of an electronic device of a second type is completed according to an embodiment.
FIG. 2C illustrates an example of a visual object displayed on an electronic paper display after boot up of an electronic device of a third type is completed according to an embodiment.
FIG. 3A illustrates an example of media content related to an image in which an electronic device of a first type obtains through a camera according to an embodiment.
FIG. 3B illustrates an example of media content related to an image in which an electronic device of a second type obtains through a camera according to an embodiment.
FIG. 3C illustrates an example of media content related to an image in which an electronic device of a third type obtains through a camera according to an embodiment.
FIG. 4A illustrates an example of media content related to at least one token in which an electronic device of a first type displays on an electronic paper display according to an embodiment.
FIG. 4B illustrates an example of media content related to at least one token in which an electronic device of a second type displays on an electronic paper display according to an embodiment.
FIG. 4C illustrates an example of media content related to at least one token in which an electronic device of a third type displays on an electronic paper display according to an embodiment.
FIG. 5A illustrates an example of a user interface for generating media content in which an electronic device of a first type displays on a flexible display according to an embodiment.
FIG. 5B illustrates an example of a user interface for generating media content in which an electronic device of a second type displays on a flexible display according to an embodiment.
FIG. 5C illustrates an example of a user interface for generating media content in which an electronic device of a third type displays on a flexible display according to an embodiment.
FIG. 6 illustrates an example of a flowchart indicating an operation of an electronic device according to an embodiment.
FIG. 7A illustrates an example of an operation for transmitting media content to an external electronic device by an electronic device of a first type according to an embodiment.
FIG. 7B illustrates an example of an operation for transmitting media content to an external electronic device by an electronic device of a second type according to an embodiment.
FIG. 7C illustrates an example of an operation for transmitting media content to an external electronic device by an electronic device of a third type according to an embodiment.
FIG. 7D illustrates an example of an operation for transmitting media content to an external electronic device by an electronic device according to an embodiment.
FIG. 8A illustrates an example of media content obtained based on an electronic device of a first type identifying at least one code according to an embodiment.
FIG. 8B illustrates an example of media content obtained based on an electronic device of a second type identifying at least one code according to an embodiment.
FIG. 8C illustrates an example of media content obtained based on an electronic device of a third type identifying at least one code according to an embodiment.
FIG. 9A illustrates an example of an operation in which an electronic device of a first type displays a visual object related to a user of the electronic device on an electronic paper display according to an embodiment.
FIG. 9B illustrates an example of an operation in which an electronic device of a second type displays a visual object related to a user of the electronic device on an electronic paper display according to an embodiment.
FIG. 9C illustrates an example of an operation in which an electronic device of a third type displays a visual object related to a user of the electronic device on an electronic paper display according to an embodiment.
FIG. 10A illustrates an example of visual objects in which an electronic device of a first type displays according to an embodiment.
FIG. 10B illustrates an example of visual objects in which an electronic device of a second type displays according to an embodiment.
FIG. 10C illustrates an example of visual objects in which an electronic device of a third type displays according to an embodiment.
FIG. 11 illustrates an example of a flowchart indicating an operation of an electronic device according to an embodiment.
FIG. 12A illustrates an example of visual objects in which an electronic device of a first type displays according to an embodiment.
FIG. 12B illustrates an example of visual objects in which an electronic device of a second type displays according to an embodiment.
FIG. 12C illustrates an example of visual objects in which an electronic device of a third type displays according to an embodiment.
FIG. 13A illustrates an example of visual objects in which an electronic device of a first type displays according to an embodiment.
FIG. 13B illustrates an example of visual objects in which an electronic device of a second type displays according to an embodiment.
FIG. 13C illustrates an example of visual objects in which an electronic device of a third type displays according to an embodiment.
FIG. 14A illustrates an example of visual objects in which an electronic device of a first type displays according to an embodiment.
FIG. 14B illustrates an example of visual objects in which an electronic device of a second type displays according to an embodiment.
FIG. 14C illustrates an example of visual objects in which an electronic device of a third type displays according to an embodiment.
FIG. 15A illustrates an example of visual objects in which an electronic device of a first type displays according to an embodiment.
FIG. 15B illustrates an example of visual objects in which an electronic device of a second type displays according to an embodiment.
FIG. 15C illustrates an example of visual objects in which an electronic device of a third type displays according to an embodiment.
FIG. 16 is a block diagram of an electronic device in a network environment according to various embodiments.
FIG. 17 is a flowchart indicating an operation of an electronic device according to an embodiment.
FIG. 18 is a flowchart indicating an operation of an electronic device according to an embodiment.

### [Mode for Invention]

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, are only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

Hereinafter, various embodiments of the present document will be described with reference to the accompanying drawings.

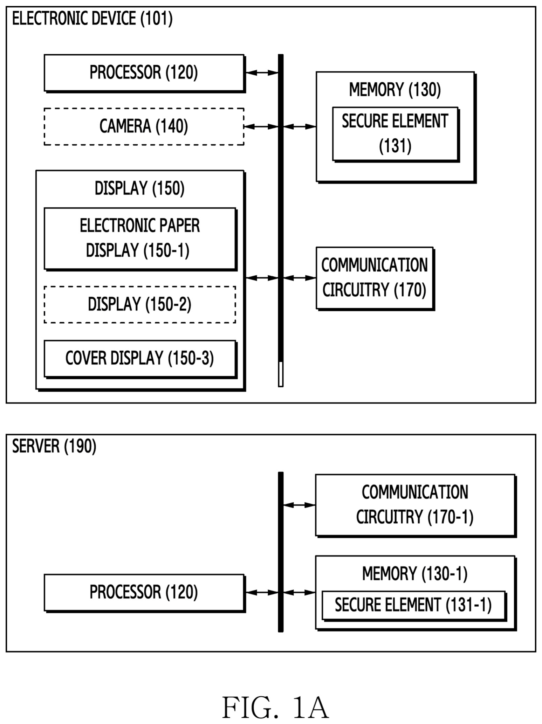

FIG. 1A illustrates an example of a block diagram of an electronic device according to an embodiment. In an embodiment, in terms of being owned by a user, an electronic device 101 may be referred to as a terminal (or a user terminal). The terminal may include, for example, a personal computer (PC) such as a laptop and a desktop. The terminal may include, for example, a smartphone, a smart pad, and/or a tablet PC. The terminal may include a smart accessory such as a smartwatch and/or a head-mounted device (HMD). The electronic device 101 according to an embodiment may include a deformable housing. Based on a possibility of deformation, the housing of the electronic device 101 may be divided into a plurality of portions.

The electronic device 101 according to an embodiment may include at least one of a processor 120, memory 130, a camera 140, a display 150, and communication circuitry 170. The processor 120, the memory 130, the camera 140, the display 150, and the communication circuitry 170 may be electronically and/or operably coupled with each other by an electronic component such as a communication bus. In an embodiment, the electronic device 101 may further include an electronic paper display 150-1, a display 150-2, and/or a cover display 150-3. According to an embodiment, the cover display 150-3 of the electronic device 101 may be omitted.

In an embodiment, hardware of the electronic device 101 being operably coupled may mean that a direct connection, or an indirect connection between the hardware is established by wire or wirelessly, such that second hardware among the hardware is controlled by first hardware. Although illustrated based on different blocks, an embodiment is not limited thereto, and some of the hardware (e.g., the processor 120, the memory 130, and the communication circuitry 170) of FIG. 1A may be included in a single integrated circuit such as a system on a chip (SoC). The hardware of the electronic device 101 divided into blocks may be positioned in a first housing 161, a second housing 162, and/or a hinge housing 163. A type and/or the number of the hardware included in the electronic device 101 is not limited as illustrated in FIG. 1A. For example, the electronic device 101 may include only some of the hardware components illustrated in FIG. 1A.

The processor 120 of the electronic device 101 according to an embodiment may include hardware for processing data based on one or more instructions. The hardware for processing data may include, for example, an arithmetic and logic unit (ALU), a floating point unit (FPU), a field programmable gate array (FPGA), a central processing unit (CPU), and/or an application processor (AP). The number of processors 120 may be one or more. For example, the processor 120 may have a structure of a multi-core processor such as a dual core, a quad core, or a hexa core.

The memory 130 of the electronic device 101 according to an embodiment may include a hardware component for storing data and/or instructions inputted to and/or outputted from the processor 120. The memory 130 may include, for example, volatile memory such as random-access memory (RAM) and/or non-volatile memory such as read-only memory (ROM). The volatile memory may include, for example, at least one of dynamic RAM (DRAM), static RAM (SRAM), cache RAM, and pseudo SRAM (PSRAM). The non-volatile memory may include, for example, at least one of programmable ROM (PROM), erasable PROM (EPROM), electrically erasable PROM (EEPROM), flash memory, a hard disk, a compact disk, a solid state drive (SSD), and an embedded multimedia card (eMMC).

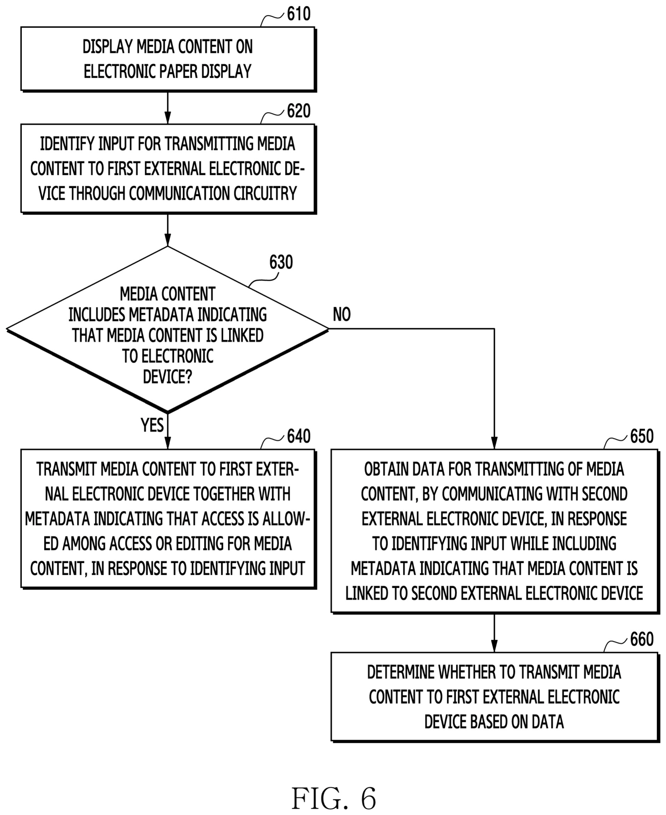

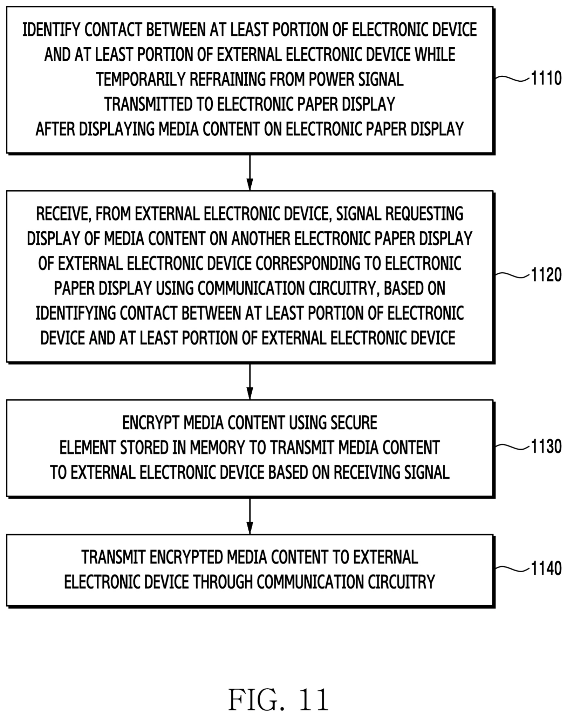

In the memory 130 of the electronic device 101 according to an embodiment, one or more instructions (or commands) indicating a calculation and/or an operation to be performed by the processor 120 on data may be stored. A set of one or more instructions may be referred to as firmware, an operating system, a process, a routine, a sub-routine and/or an application. For example, the electronic device 101 and/or the processor 120 may perform at least one of operations of FIGS. 6 and 11 when a set of a plurality of instructions distributed in a form of an operating system, a firmware, a driver, and/or an application is executed. Hereinafter, an application being installed in the electronic device 101 may mean that one or more instructions provided in a form of the application are stored in the memory 130 of the electronic device 101, and that the one or more applications are stored in an executable format (e.g., a file with an extension designated by an operating system of the electronic device 101).

According to an embodiment, the electronic device 101 may include a secure element 131. For example, in terms of software, the secure element 131 may be stored in the memory 130 based on a type of at least one program. For example, in terms of hardware, the secure element 131 may be referred to as a secure module (or a secure unit). However, it is not limited thereto.

For example, the electronic device 101 may change media content stored in the memory 130 using the secure element 131. The media content may include a video, an image, text, an audio, or a combination thereof. For example, the electronic device 101 may encrypt the media content based on digital rights management (DRM) using the secure element 131. The electronic device 101 may encrypt the media content by generating metadata including encrypted information using the secure element. The electronic device 101 may encrypt the media content so that a designated user (or an external electronic device corresponding to the user) may access the media content. For example, the electronic device 101 may provide the designated user (or the external electronic device corresponding to the user) with an encryption key capable of decrypting to access the media content. However, it is not limited thereto. For example, the electronic device 101 may set a period and/or the number of times in which the media content may be used using the secure element 131. The encrypted media content may be set so that only an access function among the access function and an editing function is allowed. For example, the electronic device 101 may display the encrypted media content on the display 150. The electronic device 101 may display the encrypted media content on the display 150 for a designated period. The electronic device 101 may control (or limit) a user input for editing the encrypted media content. In order to indicate the encrypted media content, the electronic device 101 may further display a visual object indicating authentication together with the media content on the display 150.

The display 150 of the electronic device 101 according to an embodiment may output visualized information to the user. For example, the display 150 may output the visualized information to the user by being controlled by a controller such as a graphic processing unit (GPU). The display 150 may include a liquid crystal display (LCD), a plasma display panel (PDP), and/or one or more light emitting diodes (LEDs). The LED may include an organic LED (OLED). The display 150 may include the electronic paper display 150-1. The display 150 may have at least a partially curved shape, and/or a deformable shape.

The cover display 150-3 of the electronic device 101 according to an embodiment may be provided to output visualized information to the user, similar to the display 150. As described above, the cover display 150-3 may be disposed on a different side from a side of the electronic device 101 on which the display 150-1 is disposed. A location of the cover display 150-3 may be disposed on a side of a visible housing in a state in which the display 150-1 is covered (e.g., a folded state). The cover display 150-3 may be implemented similarly to the display 150-1. Among a description of the cover display 150-2, an overlapping description with the display 150 may be omitted for convenience of description.

The electronic device 101 according to an embodiment may provide the user with visualized information using the electronic paper display 150-1 (e-paper). The electronic paper display 150-1 may be disposed on another side opposite to the side of the electronic device 101 on which the display 150-1 is disposed. The electronic paper display 150-1 may be disposed in the second housing 162 different from the first housing 161 in which the cover display 150-2 is disposed. Unlike outputting the visualized information by light, the electronic paper display 150-1 may display the visualized information by changing a location of particles (e.g., particles having different charges) included in the electronic paper display 150-1 through a power signal. Each of the particles may be distinguished by different colors. The electronic device 101 may provide the user with the visualized information displayed on the electronic paper display 150-1 by using reflected light generated by reflecting external light toward the electronic device 101 by the electronic paper display 150-1.

For example, the electronic device 101 may temporarily refrain from transmitting the power signal to the electronic paper display 150-1 after displaying the visualized information (e.g., the media content) on the electronic paper display 150-1. The electronic device 101 may maintain display of the visualized information (e.g., the media content) on the electronic paper display 150-1 even after temporarily refraining from transmitting the power signal to the electronic paper display 150-1. The electronic device 101 may reduce power loss of a battery (not illustrated) while providing the user with the visualized information using the electronic paper display 150-1.

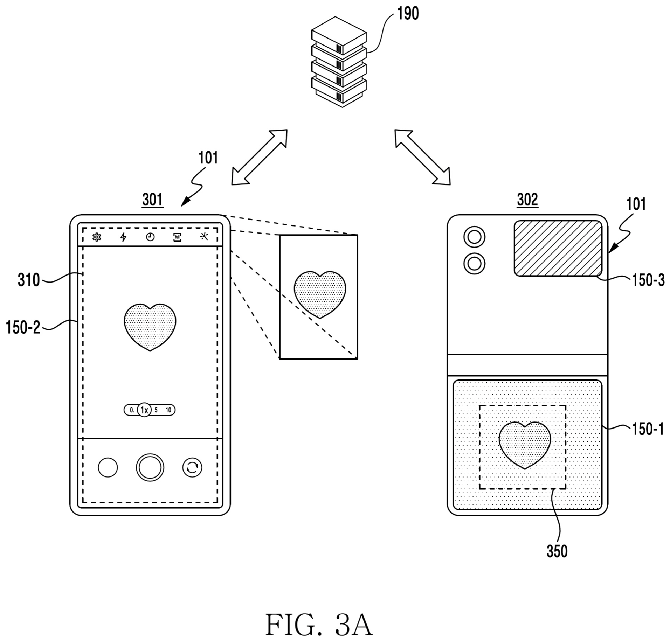

The camera 140 of the electronic device 101 according to an embodiment may include one or more optical sensors (e.g., a charged coupled device (CCD) sensor and a complementary metal oxide semiconductor (CMOS) sensor) that generate an electrical signal indicating color and/or brightness of light. A plurality of optical sensors included in the camera 140 may be disposed in a form of a 2 dimensional array. The camera 140 may generate an image including a plurality of pixels that correspond to light reaching the optical sensors of the 2 dimensional array and are disposed in 2 dimensions, by obtaining an electrical signal of each of the plurality of optical sensors substantially simultaneously. For example, photo data captured using the camera 140 may mean one image obtained from the camera 140. For example, video data captured using camera 140 may mean a sequence of a plurality of images obtained from camera 140 according to a designated frame rate. The electronic device 101 according to an embodiment may further include a flash light that is disposed toward a direction in which the camera 140 receives light and is for output the light in the direction. The number of cameras 140 included in the electronic device 101 may be one or more. For example, the electronic device 101 may generate media content to be displayed on the display 150 using the image obtained through the camera 140. An operation in which the electronic device 101 generates the media content using the image will be described later with reference to FIGS. 3A to 3C.

The communication circuitry 170 of the electronic device 101 according to an embodiment may include hardware for supporting transmission and/or reception of an electrical signal between the electronic device 101 and a server 190 (or an external electronic device). The communication circuitry 170 may include, for example, at least one of a MODEM, an antenna, and an optic/electronic (O/E) converter. The communication circuitry 170 may support the transmission and/or the reception of the electrical signal, based on various types of protocols such as Ethernet, a local area network (LAN), a wide area network (WAN), wireless fidelity (WiFi), near field communication (NFC), Bluetooth, Bluetooth low energy (BLE), ZigBee, long term evolution (LTE), 5G new radio (NR), and/or 6G.

Referring to FIG. 1A, the electronic device 101 and the server 190 may be connected to each other based on a wired network and/or a wireless network. The wired network may include a network such as the Internet, the local area network (LAN), the wide area network (WAN), the Ethernet, or a combination thereof. The wireless network may include networks such as the long term evolution (LTE), the 5G new radio (NR), the wireless fidelity (WiFi), the Zigbee, the near field communication (NFC), the Bluetooth, the Bluetooth low-energy (BLE), or a combination thereof. Although the electronic device 101 and the server 190 are illustrated to be directly connected, the electronic device 101 and the server 190 may be connected indirectly through an intermediate node in a network.

Referring to FIG. 1A, in an embodiment, the server 190 may include at least one of a processor 120-1, memory 130-1, or communication circuitry 170-1. In the server 190, the processor 120-1, the memory 130-1, and the communication circuitry 170-1 may be electronically and/or operably coupled with each other through the communication bus. The processor 120-1, the memory 130-1, and the communication circuitry 170-1 included in the server 190 may include a hardware component and/or circuitry corresponding to the processor 120, the memory 130, and the communication circuitry 170 of the electronic device 101. A secure element 131-1 included in the server 190 may be referred to the secure element 131 of the electronic device 101. Hereinafter, in order to reduce repetition, a description of hardware and/or software included in the server 190 may be omitted within an overlapping range with the electronic device 101.

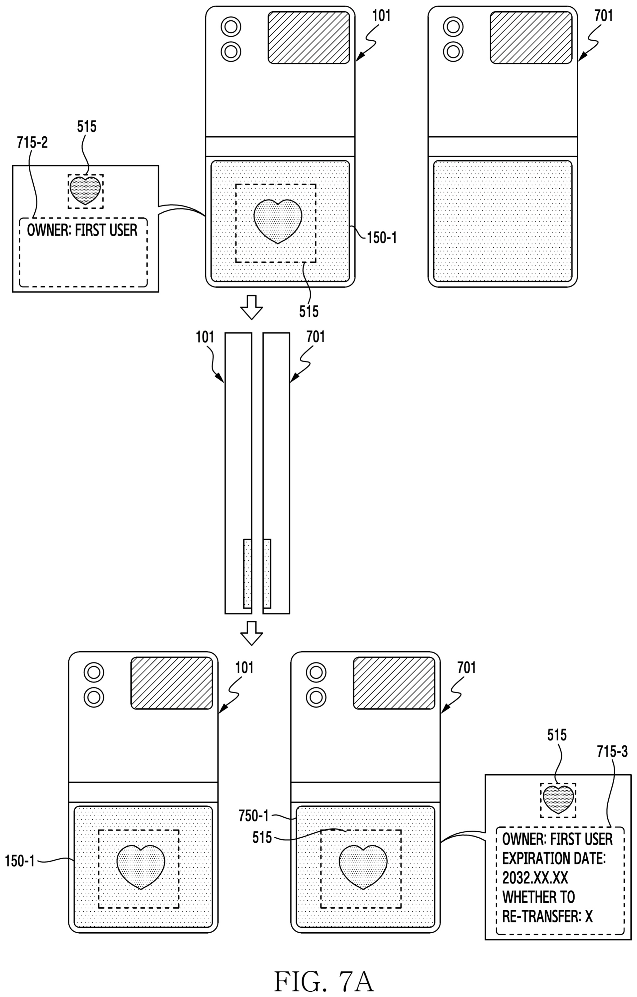

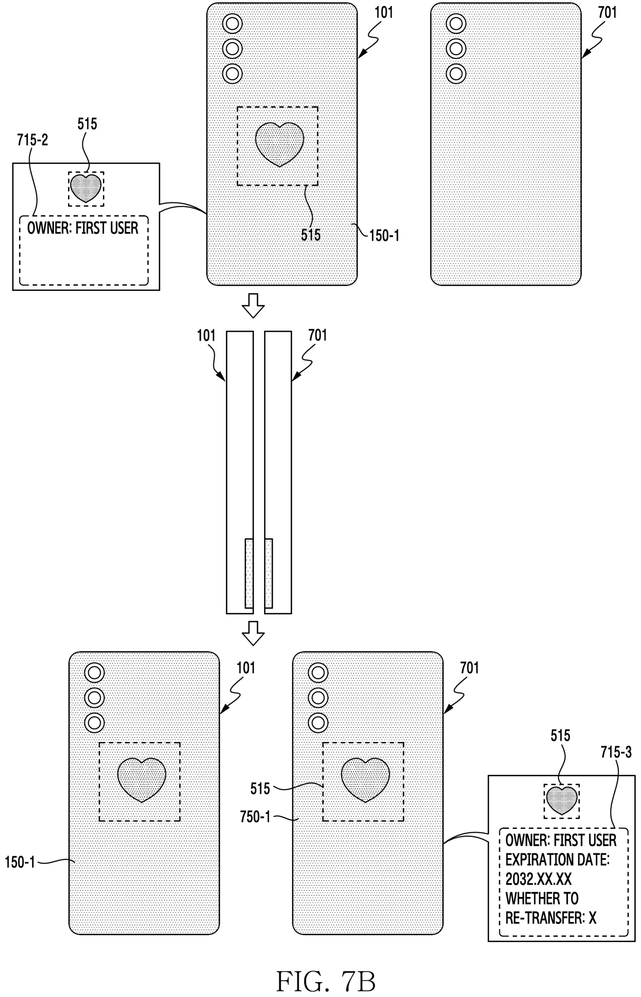

The electronic device 101 according to an embodiment may identify metadata (e.g., second metadata 715-2 of FIG. 7A or first metadata 715-1 of FIG. 7B to be described later) included in the media content to transmit the media content to an external electronic device that is distinguished from the electronic device 101. In a case that rights of the media content are linked to the electronic device 101, the electronic device 101 may transmit the media content to the external electronic device together with metadata (e.g., third metadata 715-3 of FIG. 7A to be described later) indicating that access is allowed among the access or editing for the media content. In a case that the rights of the media content are linked to the electronic device 101, it may include a case in which the electronic device may control (or manage) the rights of the media content.

For example, in a case that the rights of the media content are linked to the server 190, the electronic device 101 may obtain data for transmission of the media content by communicating with the server 190. The electronic device 101 may determine whether to transmit the media content to the external electronic device based on the data. The data may include information indicating whether the external electronic device is accessible to the media content. The case that the rights of the media content are linked to the server 190 may include a case that the rights of the media content are controlled by another user (or an external electronic device of the other user) distinguished from the user corresponding to the electronic device 101. The case that the rights of the media content are linked to the server 190 may include a case that the server 190 may control the rights of the media content. In a case that the rights of the media content are linked to the server 190, the media content displayed on the display 150 of the electronic device 101 may be an example of encrypted media content based on DRM. For example, a shape and/or a hardware configuration of the external electronic device may be referred to a shape and/or a hardware configuration of the electronic device 101. The media content may be displayed on an electronic paper display of the external electronic device. However, it is not limited thereto.

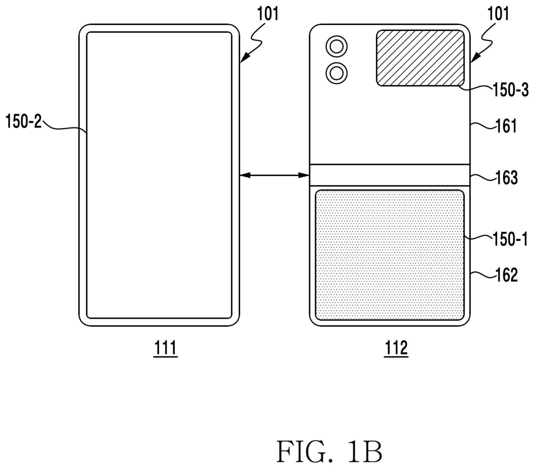

FIG. 1B illustrates an example of an electronic device of a first type according to an embodiment.

In an embodiment, an electronic device 101 may be a foldable electronic device. For example, a housing of the electronic device 101 may include a first housing 161, a second housing 162, and a hinge housing 163 in which a hinge for rotatably coupling the first housing 161 and the second housing 162 is located. By the hinge housing 163, a relative location, an angle, a shape, and/or a distance of the first housing 161 and the second housing 162, which are rigid bodies, may be changed by an external force. For example, a folding axis formed in the hinge housing 163 may be a rotation axis of the first housing 161 and the second housing 162. As the first housing 161 and/or the second housing 162 are rotated with respect to the folding axis, an angle between the first housing 161, the hinge housing 163, and the second housing 162 may be changed. For example, the electronic device 101 may include a display 150-2 disposed on a side (e.g., a front side 111 of the electronic device 101) of the first housing 161 and the second housing 162. It may include the display 150-2. The display 150-2 may be referred to as a flexible display 150-2 in terms of being folded. For example, the flexible display 150-2 may be disposed across the hinge housing 163 from the first housing 161 to the second housing 162. Hereinafter, an angle between the first housing 161 and the second housing 162 may correspond to an angle between a side of the first housing 161 and a side of the second housing 162, on which the flexible display 150-2 is disposed, which may be folded by the folding axis of the hinge housing 163. A state of the electronic device 101 in which the angle is substantially flat (e.g., about 180 degrees) may be referred to as a fully unfolded state, an opened state, an unfolded state, a flat state, and/or a planar state. In the state, the flexible display 150-2 disposed from the first housing 161 to the second housing 162 may have a substantially flat shape. In the state, a single plane may be formed on the front side of the electronic device 101 on which the flexible display 150-2 is disposed.

For example, a state of the electronic device 101 in which the angle between the first housing 161 and the second housing 162 is substantially 0 degrees may be referred to as a fully folded state, a folded state, and/or a closed state. In the state, the flexible display 150-2 may be fully visually covered by the first housing 161 to the second housing 162. For example, in the state, a size at which the flexible display 150-2 of the electronic device 101 is exposed to the outside may be substantially 0.

For example, the electronic device 101 may include a display 150-3 disposed on a rear side 112 of the first housing 161 opposite to the front side 111 on which the display 150-2 is disposed. The display 150-3 may be referred to as a cover display in terms of being disposed on the rear side 112 facing the outside of the electronic device 101 in the folded state. For example, the electronic device 101 may include the cover display 150-3 disposed on a second side of the first housing 161 opposite to a first side of the first housing 161 on which a portion of the flexible display 150-2 is disposed. As an example, a size of the cover display 150-3 disposed on the second side of the first housing 161 may be changed according to an embodiment.

For example, the electronic device 101 may include a display 150-1 disposed on the rear side 112 of the second housing 162 opposite to the front side 111 on which the flexible display 150-2 is disposed. The display 150-1 may be referred to as an electronic paper display 150-1 in terms of including electronic paper. For example, the electronic device 101 may include the electronic paper display 150-1 disposed on a second side of the second housing 162 opposite to a first side of the second housing 162 on which a portion of the flexible display 150-2 is disposed.

In an embodiment, the electronic device 101 illustrated in FIG. 1B may be referred to as the electronic device 101 of the first type. Herein, the electronic device 101 of the first type may refer to the electronic device 101 of a type in which the first housing 161 and the second housing 162 are rotatably coupled up and down with respect to the hinge housing 163.

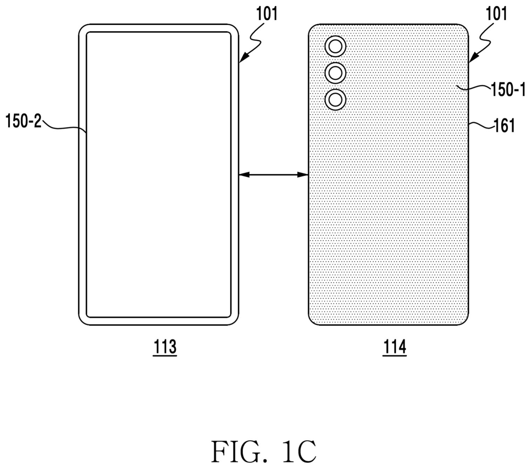

FIG. 1C illustrates an example of an electronic device of a second type according to an embodiment.

In an embodiment, an electronic device 101 may be a bar-type electronic device. For example, a housing of the electronic device 101 may include a first housing 161. For example, the electronic device 101 may include a display 150-2 disposed on a side (e.g., a front side 113 of the electronic device 101) of the first housing 161. The display 150-2 may be referred to as a flat display 150-2. For example, the flat display 150-2 may be disposed across the first housing 161.

For example, the electronic device 101 may include a display 150-1 disposed on a rear side 114 of the first housing 161 opposite to the front side 113 on which the flat display 150-2 is disposed. The display 150-1 may be referred to as an electronic paper display 150-1 in terms of including electronic paper. For example, the electronic device 101 may include the electronic paper display 150-1 on which the electronic paper display 150-2 is disposed on a second side of the first housing 161 opposite to a first side of the first housing 161.

In an embodiment, the electronic device 101 illustrated in FIG. 1C may be referred to as the electronic device 101 of the second type. Herein, the electronic device 101 of the second type may refer to the electronic device 101 of a type fixed through the first housing 161.

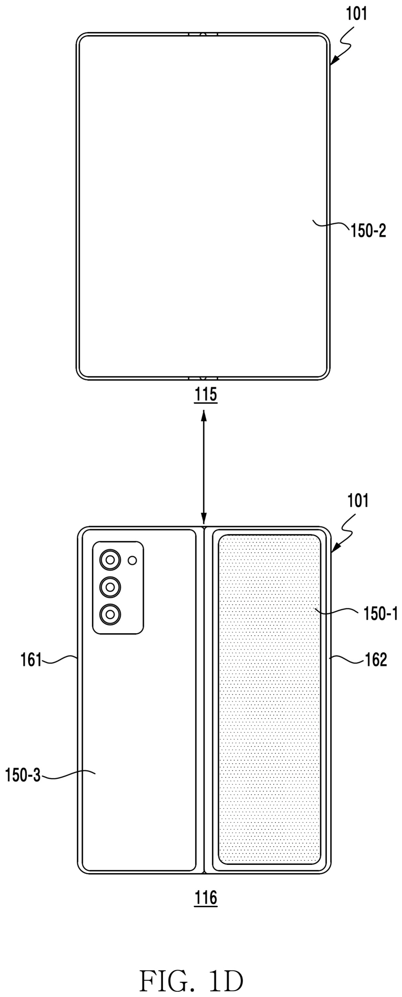

FIG. 1D illustrates an example of an electronic device of a third type according to an embodiment.

In an embodiment, an electronic device 101 may be a foldable electronic device. For example, a housing of the electronic device 101 may include a first housing 161, a second housing 162, and a hinge housing 163 in which a hinge for rotatably coupling the first housing 161 and the second housing 162 is located. Compared to the electronic device 101 of FIG. 1B, the electronic device 101 of FIG. 1D may have the first housing 161 and the second housing 162 rotatably coupled left and right with respect to the hinge housing 163.

For example, the electronic device 101 may include a display 150-2 disposed on a side (e.g., a front side 115 of the electronic device 101) of the first housing 161 and the second housing 162. It may include the display 150-2. The display 150-2 may be referred to as a flexible display 150-2 in terms of being folded. For example, the flexible display 150-2 may be disposed across the hinge housing 163 from the first housing 161 to the second housing 162. Hereinafter, an angle between the first housing 161 and the second housing 162 may correspond to an angle between a side of the first housing 161 and a side of the second housing 162, on which the flexible display 150-2 is disposed, which may be folded by a folding axis of a hinge housing (not illustrated). A state of the electronic device 101 in which the angle is substantially flat (e.g., about 180 degrees) may be referred to as a fully unfolded state, an opened state, an unfolded state, a flat state, and/or a planar state. In the state, the flexible display 150-2 disposed from the first housing 161 to the second housing 162 may have a substantially flat shape. In the state, a single plane may be formed on the front side of the electronic device 101 on which the flexible display 150-2 is disposed.

For example, a state of the electronic device 101 in which the angle between the first housing 161 and the second housing 162 is substantially 0 degrees may be referred to as a fully folded state, a folded state, and/or a closed state. In the state, the flexible display 150-2 may be fully visually covered by the first housing 161 to the second housing 162. For example, in the state, a size at which the flexible display 150-2 of the electronic device 101 is exposed to the outside may be substantially 0.

For example, the electronic device 101 may include a display 150-3 disposed on a rear side 116 of the first housing 161 opposite to the front side 115 on which the flexible display 150-2 is disposed. The display 150-3 may be referred to as a cover display 150-3 in terms of being disposed on the rear side 116 facing the outside of the electronic device 101 in the folded state. For example, the electronic device 101 may include the cover display 150-3 disposed on a second side of the first housing 161 opposite to a first side of the first housing 161 on which a portion of the flexible display 150-2 is disposed. For example, a size of the cover display 150-3 disposed on the second side of the first housing 161 may be changed according to an embodiment.

For example, the electronic device 101 may include a display 150-1 disposed on a rear side of the second housing 162 opposite to the front side on which the flexible display 150-2 is disposed. The display 150-1 may be referred to as an electronic paper display 150-1 in terms of including electronic paper. For example, the electronic device 101 may include the electronic paper display 150-1 disposed on a second side of the second housing 162 opposite to a first side of the second housing 162 on which a portion of the flexible display 150-2 is disposed.

In an embodiment, the electronic device 101 illustrated in FIG. 1D may be referred to as the electronic device 101 of the third type. Herein, the electronic device 101 of the third type may refer to the electronic device 101 of a type in which the first housing 161 and the second housing 162 are rotatably coupled left and right with respect to the hinge housing 163.

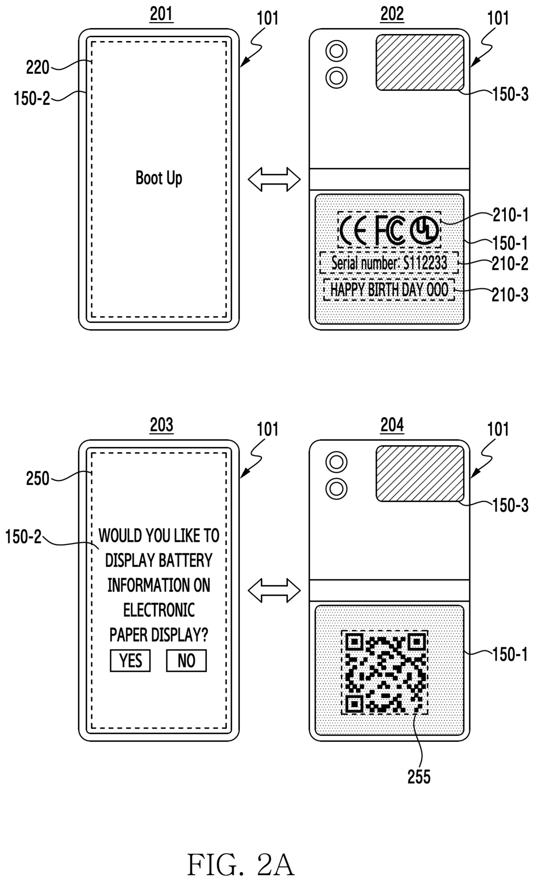

Hereinafter, referring to FIGS. 2A to 2C, an example of an operation of displaying designated media content on the electronic paper display 150-1 after the electronic device 101 completes boot up will be described later.

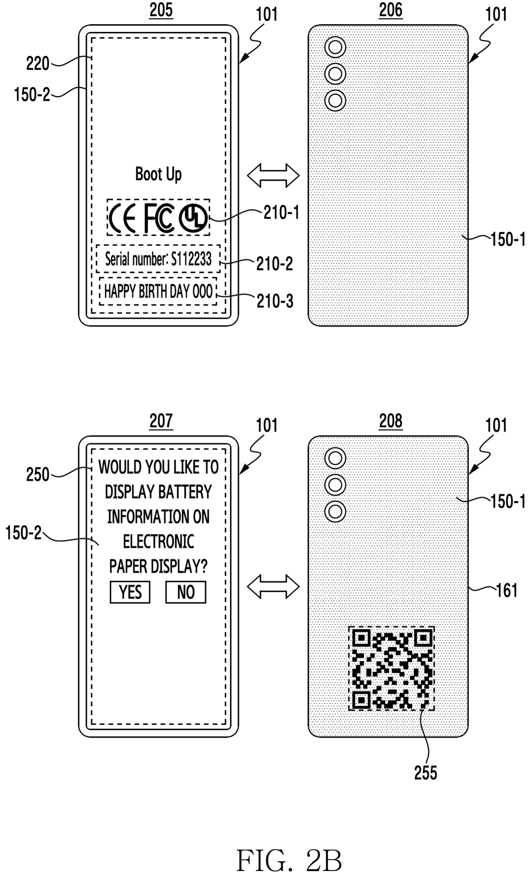

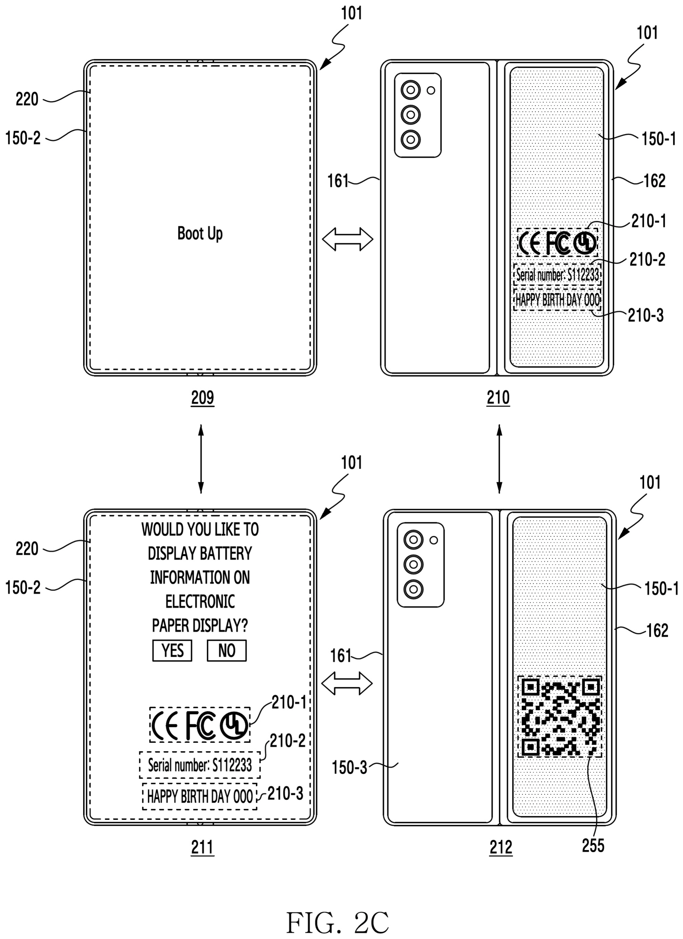

FIG. 2A illustrates an example of a visual object displayed on an electronic paper display after boot up of an electronic device of a first type is completed according to an embodiment. FIG. 2B illustrates an example of a visual object displayed on an electronic paper display after boot up of an electronic device of a second type is completed according to an embodiment. FIG. 2C illustrates an example of a visual object displayed on an electronic paper display after boot up of an electronic device of a third type is completed according to an embodiment. An electronic device 101 of FIG. 2A may include the electronic device 101 of FIG. 1A or 1B. An electronic device 101 of FIG. 2B may include the electronic device 101 of FIGS. 1A and 1C. Ab electronic device 101 of FIG. 2C may include the electronic device 101 of FIGS. 1A and 1D.

Referring to FIGS. 2A to 2C, in a state 201, 205, or 209 according to an embodiment, the electronic device 101 may identify (or receive) an event. In the state 201, 205, or 209 according to an embodiment, the electronic device 101 may receive an input (or an event) a start of boot up. The electronic device 101 may display a screen 220 indicating the boot up on a display (e.g., a display 150-2) based on reception of the input indicating the start of the boot up. The electronic device 101 may notify a user of the start of the boot up using the screen 220. The electronic device 101 may identify media contents to be displayed on an electronic paper display 150-1 while performing the boot up. The electronic device 101 may identify a user account linked to the electronic device 101 while performing the boot up of the electronic device. The electronic device 101 may display the media contents including metadata (e.g., second metadata 715-2 of FIG. 7A) indicating identification information of the electronic device on the electronic paper display 150-1 based on identifying the user account. The electronic device 101 may identify a network for communicating with the electronic device 101 while performing the boot up. The electronic device 101 may identify a region (e.g., a country) that provides the network based on identifying the network. The electronic device 101 may identify whether the electronic device 101 related to the region is authenticated based on identifying the region. However, it is not limited thereto. For example, the electronic device 101 may perform authentication of the electronic device 101 (or authentication of the user account) from a server 190 based on identifying the network.

The electronic device 101 according to an embodiment may display the media contents on the electronic paper display 150-1 after the boot up is completed in a state 202, 206, or 210. For example, the electronic device 101 may display media content 210-1 (or a visual object). The media content 210-1 may mean an authentication code (or a label) provided by an authentication authority for each region (e.g., country) indicating that use of the electronic device 101 is allowed. The media content 210-1 may be obtained from the server 190 based on the electronic device 101 being authenticated by the server 190. The media content 210-1 and metadata or reference information (e.g., user account information, and/or a decryption key for decoding the media content 210-1) related to the media content 210-1 may be obtained from the server 190 based on the electronic device 101 being authenticated by the server 190.

For example, the electronic device 101 may display media content 210-2 (or a text object). The media content 210-2 may indicate identification information of the electronic device 101. The media content 210-2 may include a serial number for distinguishing the electronic device 101 from another electronic device.

For example, the electronic device 101 may display media content 210-3. The media content 210-3 may be obtained based on identifying the user account linked to electronic device 101. The media content 210-3 may include text information (e.g., a message) set by the user of the electronic device 101.

For example, the media contents 210-1, 210-2, and 210-3 may include metadata encrypted based on DRM. The media contents 210-1, 210-2, and 210-3 may be encrypted by the server 190. The media contents 210-1, 210-2, and 210-3 may be set to allow only access among the access or editing. The electronic device 101 may control display of the media contents 210-1, 210-2, and 210-3 independently of editing of the media contents 210-1, 210-2, and 210-3 being limited. The electronic device 101 may temporarily refrain from displaying the media contents 210-1, 210-2, and 210-3 on the electronic paper display 150-1 independently of limiting to change a shape and/or content of each of the media contents 210-1, 210-2, and 210-3. The electronic device 101 may decode the media contents 210-1, 210-2, and 210-3 and then display the decoded media contents 210-1, 210-2, and 210-3 on the electronic paper display 150-1. In an embodiment, decoding of the media contents 210-1, 210-2, and 210-3 may be based on receiving a decryption key stored in a secure element 131-1 of the server 190. In an embodiment, decoding of the media contents 210-1, 210-2, and 210-3 may be based on a decryption key stored in a secure element 130-1.

For example, the electronic device 101 may temporarily refrain from transmitting a power signal to the electronic paper display 150-1 after displaying the media contents 210-1, 210-2, and 210-3 on the electronic paper display 150-1 while performing the boot up. For example, the electronic device 101 may transmit the power signal to the electronic paper display 150-1 to display media content different from the media contents 210-1, 210-2, and 210-3 displayed on the electronic paper display 150-1. The electronic device 101 may temporarily refrain from displaying the media contents 210-1, 210-2, and 210-3 by transmitting the power signal to the electronic paper display 150-1, and may display the other media content on the electronic paper display 150-1.

The electronic device 101 according to an embodiment may identify, in a state 203, 207, or 211, an input indicating disposal of the electronic device 101 (or an input for displaying information about a hardware configuration included in the electronic device 101). The electronic device 101 may display a screen 250 on the display (e.g., the display 150-2) indicating whether to display information (e.g., an effective period) about hardware (e.g., a battery) included in the electronic device 101 on the electronic paper display 150-1 based on identifying the input.

For example, the electronic device 101 may display media content 255 (e.g., code information based on 2 dimensions) indicating the information about the electronic paper display 150-1 in a state 204, 208, or 212 based on receiving an input indicating that display of the information about the hardware. A shape, a type, and/or content of the media content 255 may be changed according to embodiment.

As described above, the electronic device 101 according to an embodiment may provide the user with visualized information by using the electronic paper display 150-1 in a state that power of the electronic device 101 is disabled. The electronic device 101 may provide the user and/or another user distinguished from the user with the information about the hardware configuration included in the electronic device 101 by providing the user with the visualized information in a state that the power of the electronic device 101 is disabled.

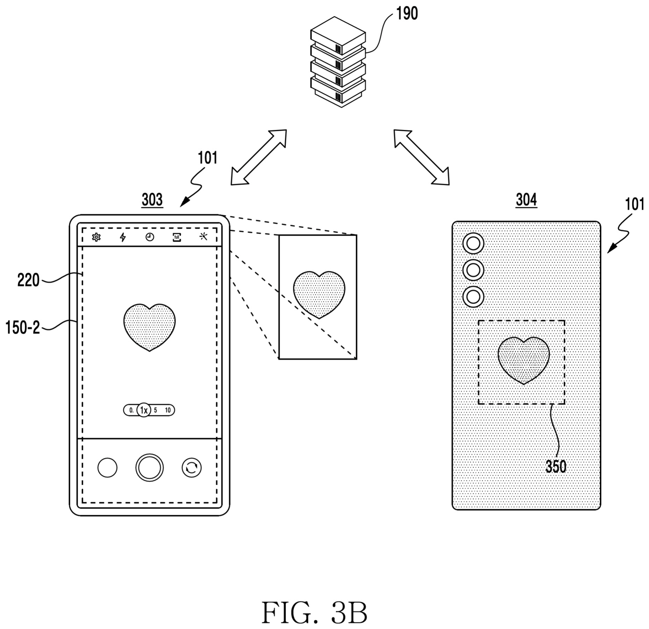

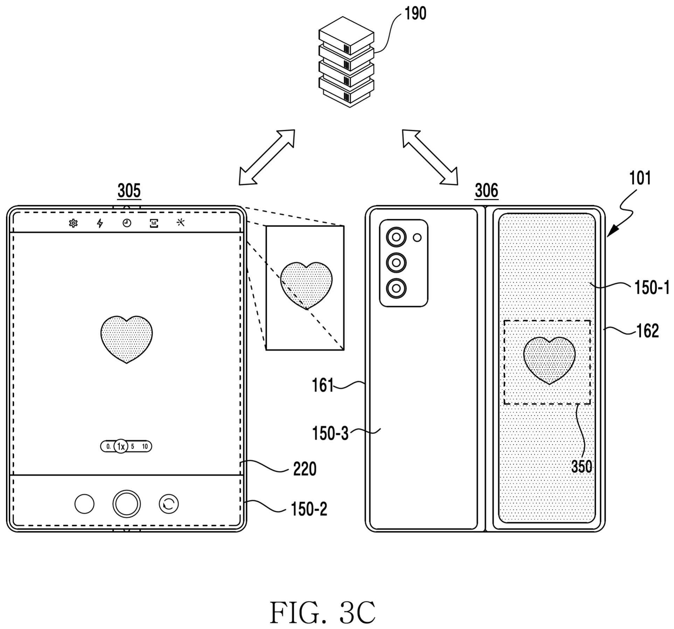

FIG. 3A illustrates an example of media content related to an image in which an electronic device of a first type obtains through a camera according to an embodiment. FIG. 3B illustrates an example of media content related to an image in which an electronic device of a second type obtains through a camera according to an embodiment. FIG. 3C illustrates an example of media content related to an image in which an electronic device of a third type obtains through a camera according to an embodiment. An electronic device 101 of FIG. 3A may include the electronic device 101 of FIGS. 1A, 1B, and/or 2A. An electronic device 101 of FIG. 3B may include the electronic device 101 of FIGS. 1A, 1C, and/or 2B. An electronic device 101 of FIG. 3C may include the electronic device 101 of FIGS. 1A, 1D, and/or 2C.

The electronic device 101 according to an embodiment may obtain an image 310 in a state 301, 303, or 305, using a camera (e.g., the camera 140 of FIG. 1A). The electronic device 101 may obtain media content 350 to be displayed on an electronic paper display 150-1 by using the image 310. For example, the electronic device 101 may display the media content 350 indicating at least a portion of the image 310 obtained using the camera on the electronic paper display 150-1. For example, the electronic device 101 may encrypt the media content 350 using a secure element to obtain the media content 350 using the image 310. The electronic device 101 may encrypt the media content 350 to limit editing of the media content 350. However, it is not limited thereto. The electronic device 101 may encrypt the media content 350 based on DRM by using information about a designated user allowing access to the media content 350. However, it is not limited thereto. For example, the electronic device 101 may display the media content 350 corresponding to the image 310 obtained through the camera on the electronic paper display 150-1 in a state 302, 304, or 306.

The electronic device 101 according to an embodiment may transmit image data on the image 310 to a server 190 after obtaining the image 310 using the camera in the state 301, 303, or 305. The server 190 may store one or more media contents in memory. The one or more media contents may be classified based on a type. The server 190 may identify media content corresponding to the image data among the one or more media contents based on receiving the image data. The server 190 may provide a theme service in terms of including the one or more media contents. The theme service may be used for the electronic device 101 to display one or more programs on a display to be suitable for a user. A theme may be obtained based on a graphic interface. The electronic device 101 may display each of the one or more media contents based on one theme on the electronic paper display 150-1, a display 150-2, and/or a cover display 150-3. The electronic device 101 may provide a user experience based on a sense of unity by displaying each of the one or more media contents based on one theme on a display 150. The electronic device 101 may provide the user with a theme service for changing the graphic interface of the electronic device 101, by being linked to the server 190.

For example, the server 190 may identify the media content corresponding to the image data among the one or more media contents based on receiving the image data. The server 190 may identify rights (e.g., ownership) of the image 310 (or a subject included in the image) based on receiving the image data. For example, from a legal perspective, the rights of the image 310 may indicate that its use is restricted to a user who does not have the rights of the image 310, such as ownership and trademark rights. The server 190 may identify the rights of the image 310 by identifying the image 310 using a neural network for analyzing the image. For example, the server 190 may identify whether the rights of the image 310 belong to another external electronic device (or another user) that is distinguished from the electronic device 101 (or the user of the electronic device 101) transmitting the image data. In a case that the rights of the image 310 are linked to the electronic device 101, the server 190 may transmit data indicating media content corresponding to the image 310 to the electronic device 101. In a case that the rights of the image 310 are linked to the other external electronic device distinguished from the electronic device 101, the server 190 may transmit the data indicating transmission of the media content corresponding to the image 310 to the other external electronic device 101. However, it is not limited thereto.

For example, the server 190 may encrypt media content to be transmitted to the electronic device 101 using a secure element. For example, the server 190 may set information indicating a period capable of using the media content, the number of uses, and/or whether it is possible to transmit the media content to the other electronic device by using metadata included in the media content. The server 190 may transmit the media content to the electronic device 101 together with the metadata on which the information is set.

For example, in the state 302, 304, or 306, the electronic device 101 may display the media content 350 on the electronic paper display 150-1 from among the display 150-2, the cover display 150-3, or the electronic paper display 150-1, based on receiving the media content from the server 190. After decoding the media content 350, the electronic device 101 may display the decoded media content 350 on the electronic paper display 150-1. In an embodiment, decoding of the media content 350 may be based on receiving a decryption key stored in a secure element 131-1 of the server 190. In an embodiment, the decoding of the media content 350 may be based on a decryption key stored in the secure element 130-1. However, it is not limited thereto. In a case that the server 190 transmits one or more media contents based on a theme related to the image 310 to the electronic device 101, the electronic device 101 may display each of the one or more media contents on each of the display 150-2, the cover display 150-3, and the electronic paper display 150-1.

As described above, the electronic device 101 according to an embodiment may obtain media content having a theme corresponding to an image obtained through a camera linked to the server 190. The electronic device 101 may display the media content on the electronic paper display 150-1 based on obtaining the media content. The media content obtained by the electronic device 101 through the server 190 may be an example of encrypted media content. The electronic device 101 may request the server 190 for an authentication procedure in order to transmit the encrypted media content to another external electronic device 101 different from the electronic device 101. The electronic device 101 may enhance security for the media content based on requesting the server 190 for the authentication procedure.

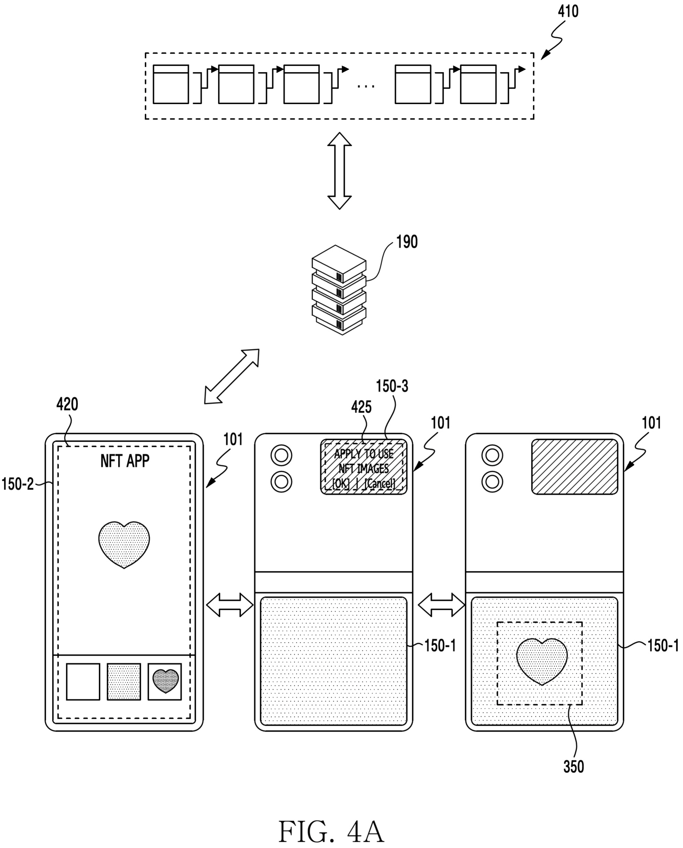

Hereinafter, referring to FIGS. 4A to 4C, an example of an operation in which the electronic device 101 displays media content based on a non-fungible token (NFT) on the electronic paper display 150-1 will be described later.

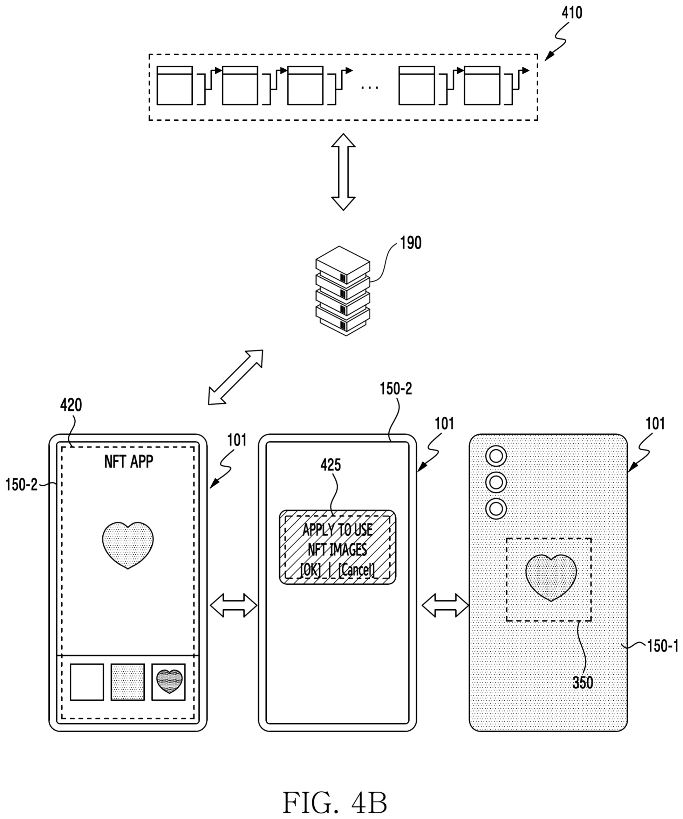

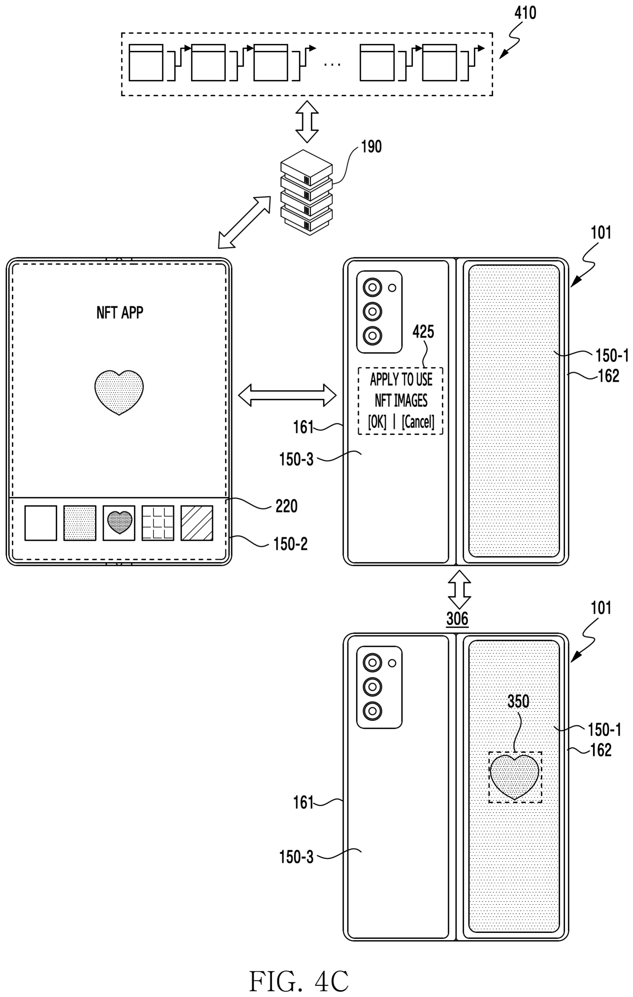

FIG. 4A illustrates an example of media content related to at least one token in which an electronic device of a first type displays on an electronic paper display according to an embodiment. FIG. 4B illustrates an example of media content related to at least one token in which an electronic device of a second type displays on an electronic paper display according to an embodiment. FIG. 4C illustrates an example of media content related to at least one token in which an electronic device of a third type displays on an electronic paper display according to an embodiment. An electronic device 101 of FIG. 4A may include the electronic device 101 of FIGS. 1A, 1B, 2A, and/or 3A.

Referring to FIGS. 4A to 4C, the electronic device 101 according to an embodiment may display media content related to a non-fungible token (NFT) on an electronic paper display 150-1. For example, the electronic device 101 may manage virtual objects related to NFT owned by a user of the electronic device 101 using an NFT software application. For example, the electronic device 101 may display a screen 420 on a display (e.g., a display 150-2) based on execution of the NFT software application.

For example, the electronic device 101 may display one or more virtual objects owned by the user of the electronic device 101 using the screen 420. The electronic device 101 may display the screen 420 using an actual object related to the NFT. The electronic device 101 may display the screen 420 by identifying a code (e.g., a QR code or an NFC tag) included in the actual object using a camera and/or communication circuitry. The screen 420 may be used to select media content for the electronic device 101 to display on the electronic paper display 150-1 among the one or more virtual objects owned by the user.

The electronic device 101 according to an embodiment may identify an event (e.g., an input for display of the media content). In an embodiment, the electronic device 101 of FIG. 4A or 4C may transmit data indicating a request for the display of the media content to the server 190 using a cover display 150-3 independently of displaying the screen 420 on the display 150-2 based on identification of the event. In an embodiment, the electronic device 101 of FIG. 4A or 4C may transmit the data indicating the request for the display of the media content to the server 190 using the cover display 150-3 independently of displaying the screen 420 on the display 150-2. For example, the electronic device 101 may transmit the data for requesting the server 190 to display the media content using a screen 425 displayed on the cover display 150-3. However, it is not limited thereto. In an embodiment, the electronic device 101 of FIG. 4B may transmit the data indicating the request for the display of the media content to the server 190 using the display 150-2 independently of displaying the screen 420 on the display 150-2. For example, the electronic device 101 may transmit the data for requesting the server 190 to display the media content using the screen 425 displayed on the display 150-2.

For example, the electronic device 101 may transmit, based on receiving an input indicating selection of the media content, data about the selected media content to the server 190. The data may include metadata indicating whether an NFT virtual object corresponding to the media content has rights over the user of the electronic device 101. As an example, the server 190 may identify a user account logged into the electronic device 101 based on receiving the data. The server 190 may identify that the rights of the media content are linked to the electronic device 101 based on identifying the user account.

For example, the server 190 may identify whether the user of the electronic device 101 has the rights of the media content by communicating with a blockchain 410 that manages the NFT. For example, the blockchain 410 may mean a group of information distributed across different electronic devices connected in a network and serially connected based on a hash value. Information related to the NFT may be distributed and stored in nodes included in the network. Among the electronic devices that store the information of the group, information stored in a specific electronic device may include other information serially connected to the information, data for identifying another electronic device in which the other information is stored in the network, and data for authenticating a serial connection between the information and the other information. The data for authenticating the serial connection between the information and the other information may include the information or a hash value of the other information. For example, the hash value may be obtained based on a transaction (e.g., the minimum unit of the transaction) indicating a transaction detail. For example, the hash value may be obtained based on a designated length. For example, the user account indicating ownership of the NFT linked to the electronic device 101 (or the user of the electronic device 101) may be distributed and stored in the blockchain 410.

For example, the server 190 may identify that the user of the electronic device 101 has the rights of the media content based on identifying the user account, by communicating with the blockchain 410. The server 190 may transmit data indicating that use of the media content is allowed to the electronic device 101. The server 190 may transmit metadata corresponding to the media content together with the media content to the electronic device 101. The metadata may include information indicating the rights of the media content, a period of use, the number of uses, and/or whether it is transferable. For example, the server 190 may transmit a visual object indicating that the use of the media content is allowed to the electronic device 101 together with media content. The visual object may indicate a serial number for identifying an NFT virtual object corresponding to the media content. The server 190 may limit editing of the serial number through a secure element. The electronic device 101 according to an embodiment may display media content 430 on the electronic paper display 150-1 based on receiving the data indicating that the use of the media content is allowed from the server 190. The electronic device 101 may display the visual object (not illustrated) together with the media content 430 on the electronic paper display 150-1.

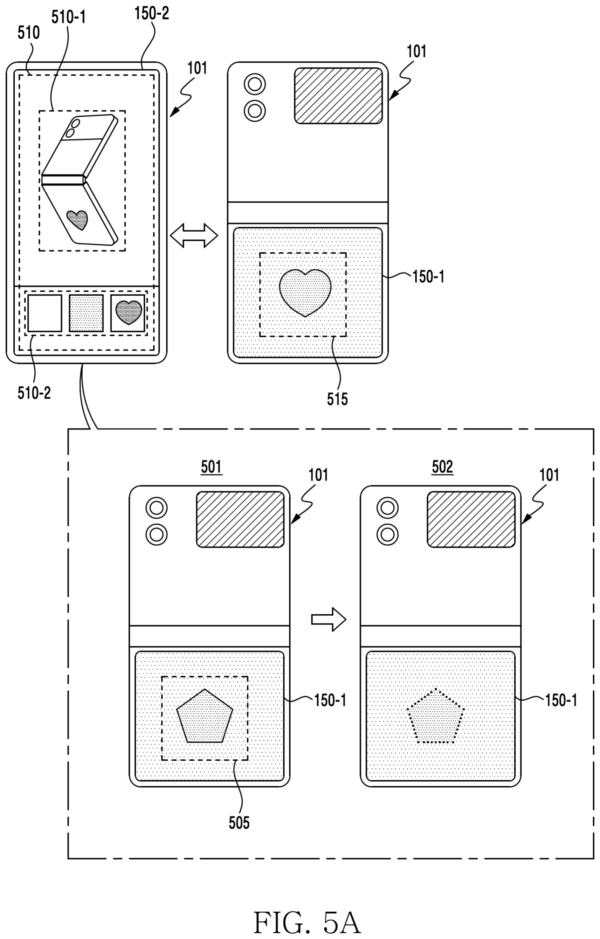

Hereinafter, an example of an operation in which the electronic device 101 generates media content to be displayed on the electronic paper display 150-1 will be described with reference to FIGS. 5A to 5C.

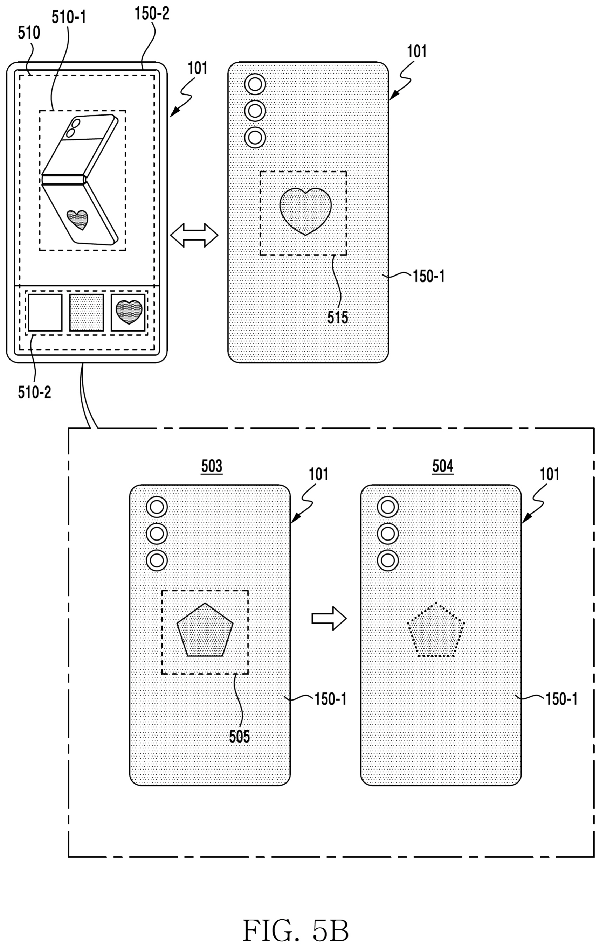

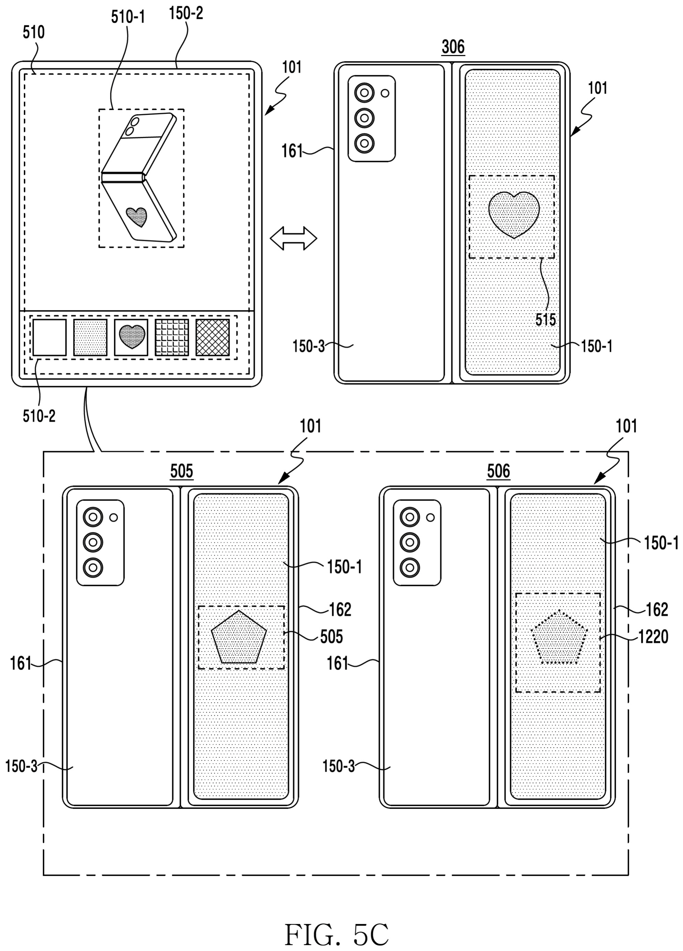

FIG. 5A illustrates an example of a user interface for generating media content in which an electronic device of a first type displays on a flexible display according to an embodiment. FIG. 5B illustrates an example of a user interface for generating media content in which an electronic device of a second type displays on a flexible display according to an embodiment. FIG. 5C illustrates an example of a user interface for generating media content in which an electronic device of a third type displays on a flexible display according to an embodiment. An electronic device 101 of FIG. 5A may include the electronic device 101 of FIGS. 1A, 1B, 2A, 3A, and/or 4A.

Referring to FIGS. 5A to 5C, the electronic device 101 according to an embodiment may display a screen 510 for obtaining media content 515 on a display 150-2. The screen 510 may include a visual object 510-1 indicating modeling of the electronic device 101 based on three dimensions and/or visual objects 510-2 for obtaining the media content 515. The screen 510 may be referred to as a user interface used to obtain the media content 515. The electronic device 101 may receive an input for selecting the media content 515 to be displayed on an electronic paper display 150-1 using the visual objects 510-2. The visual objects 510-2 may include a text object, a figure, an image, and/or color information for generating the media content 515. The electronic device 101 may receive an input indicating selection of a color, a type, and/or a shape of the media content 515 using the visual objects 510-2. For example, the electronic device 101 may generate, based on receiving an input indicating selection of one or more objects among the text object, the figure, the image, and/or the color information, the media content 515 by combining the one or more selected objects.

Based on receiving the input, the electronic device 101 may guide the media content 515 to be displayed on the electronic paper display 150-1 of the electronic device 101 to a user using the visual object 510-1. The electronic device 101 may change a shape of the visual object 510-1 by receiving an input for rotating the visual object 510-1. The electronic device 101 may display the media content 515 to be shown to the user on a display (e.g., the display 150-2) by changing the shape of the visual object 510-1 based on the input.

For example, the electronic device 101 may display the screen 510 while displaying other media content 505 on the electronic paper display 150-1 in a state 501. The electronic device 101 may enter a state 502 from the state 501 after a designated time. The electronic device 101 may display the screen 510 and then initialize display of the other media content 505 after the designated time. The electronic device 101 may display the screen 510 and then temporarily refrain from displaying the other media content 505 after the designated time. The electronic device 101 may temporarily refrain from displaying the displayed other media content 505 of the electronic paper display 150-1 in order to display the media content 515. The electronic device 101 may display the media content 515 on the electronic paper display 150-1 after receiving an input indicating obtaining of the media content 515 by temporarily refraining from displaying the other media content 505 in the state 502.

For example, based on receiving the input indicating obtaining of the media content 515, the electronic device 101 may transmit the media content 515 and/or metadata corresponding to the media content 515 to a server (e.g., the server 190 of FIG. 1A). Based on receiving the media content 515 and/or the metadata, the server may change the metadata using information indicating that the user of the electronic device 101 has rights of the media content 515. However, it is not limited thereto.

As described above, the electronic device 101 according to an embodiment may display the screen 510 based on execution of a software application for generating the media content 515. The electronic device 101 may obtain the media content 515 using the screen 510. The electronic device 101 may initialize the electronic paper display 150-1 while obtaining the media content 515. Based on initializing the electronic paper display 150-1, the electronic device 101 may reduce time for displaying the media content 515 on the electronic paper display 150-1 after obtaining the media content 515.

Hereinafter, an exemplary flowchart indicating an operation in which the electronic device 101 according to an embodiment transmits media content to another electronic device will be described with reference to FIGS. 6 to 7D.

FIG. 6 illustrates an example of a flowchart indicating an operation of an electronic device according to an embodiment. An electronic device 101 of FIG. 6 may include the electronic device 101 of FIGS. 1A to 5C. At least one of operations of FIG. 6 may be performed by the electronic device 101 of FIG. 1A and/or the processor 120 of FIG. 1A. Each of the operations of FIG. 6 may be performed sequentially, but is not necessarily performed sequentially. For example, an order of each of the operations may be changed, and at least two operations may be performed in parallel.

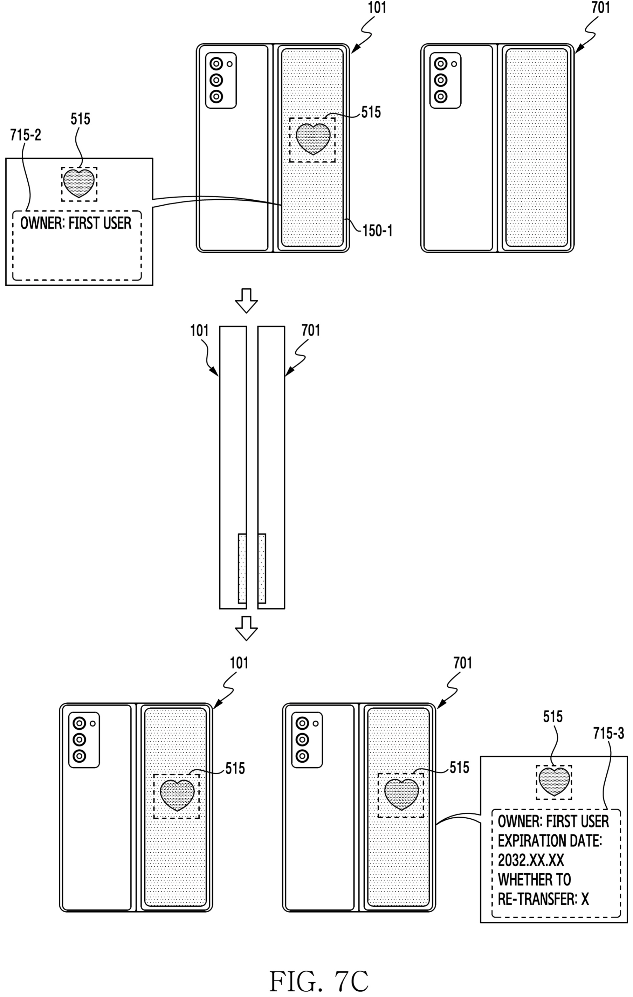

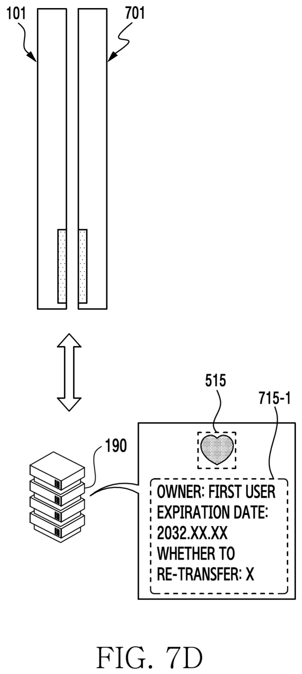

FIG. 7A illustrates an example of an operation for transmitting media content to an external electronic device by an electronic device of a first type according to an embodiment. FIG. 7B illustrates an example of an operation for transmitting media content to an external electronic device by an electronic device of a second type according to an embodiment. FIG. 7C illustrates an example of an operation for transmitting media content to an external electronic device by an electronic device of a third type according to an embodiment. FIG. 7D illustrates an example of an operation for transmitting media content to an external electronic device by an electronic device according to an embodiment. An electronic device 101 of FIG. 7A may include the electronic device 101 of FIGS. 1A, 1B, 2A, 3A, 4A and/or 5A. An electronic device 101 of FIG. 7B may include the electronic device 101 of FIGS. 1A, 1C, 2B, 3B, 4B and/or 5B. An electronic device 101 of FIG. 7C may include the electronic device 101 of FIGS. 1A, 1D, 2C, 3C, 4C and/or 5C. An electronic device 101 of FIG. 7D may include the electronic device 101 of FIGS. 1A to 7C.

Referring to FIG. 6, in operation 610, a processor according to an embodiment may display media content on an electronic paper display. The media content may include metadata indicating information about rights of the media content.

In operation 620 according to an embodiment, the processor according to an embodiment may identify an input for transmitting the media content to a first external electronic device through communication circuitry. The first external electronic device may be a terminal owned by another owner different from an owner of the electronic device. The terminal may include, for example, a personal computer (PC) such as a laptop and a desktop. The terminal may include, for example, a smartphone, a smart pad, and/or a tablet PC. The terminal may include a smart accessory such as a smartwatch and/or a head-mounted device (HMD). For example, the first external electronic device may include a hardware configuration substantially similar to that of the electronic device 101. For example, the input for transmitting the media content may include identifying that at least a portion of the electronic device 101 and at least a portion of the first external electronic device are contacted. The at least a portion of the electronic device 101 and the at least a portion of the first external electronic device may be an example of a portion in which short-range wireless communication circuitry (e.g., near field communication (NFC) communication circuitry) is included. For example, the input for transmitting the media content may include an input indicating that execution of a function (e.g., quick share) for wirelessly transmitting the media content to the first external electronic device located around the electronic device 101 is initiated. For example, the input for transmitting the media content may include an input for electronic device 101 to display a code (e.g., a QR code) corresponding to the media content on a display (e.g., a display 150-2). For example, the input for transmitting the media content may include receiving a signal from the first external electronic device indicating to request media content to display on an electronic paper display of the first external electronic device.

Referring to FIG. 6, in operation 630, the processor according to an embodiment may identify whether the media content includes metadata indicating that the media content is linked to the electronic device. The media content being linked to the electronic device may indicate that a user of the electronic device has rights of the media content.

Referring to FIG. 6, in a case that the media content is linked to the electronic device (operation 630-YES), in operation 640, the processor according to an embodiment may transmit the media content to the first external electronic device together with metadata indicating that access is allowed among the access or editing for the media content, in response to identifying the input.

Referring to FIGS. 7A to 7C, the electronic device 101 according to an embodiment may display media content 515 on an electronic paper display 150-1. The media content 515 may include user information indicating rights of the media content 515. The media content 515 may include second metadata 715-2 indicating that the media content is linked to the electronic device 101. The electronic device 101 may identify an input for transmitting the media content to a first external electronic device 701 while including the second metadata 715-2 indicating that the media content 515 is linked to the electronic device 101. The electronic device 101 may identify the input for transmitting the media content based on identifying contact of at least a portion of the electronic device 101 and at least a portion of the first external electronic device 701. After identifying the input, the electronic device 101 may display a screen indicating whether to transmit the media content to the first external electronic device 701 or a screen indicating whether to receive other media content from the first external electronic device 701 on a display (e.g., a cover display 150-3). As an example, in a case of receiving the other media content, the electronic device 101 may receive the other media content from the first external electronic device. However, it is not limited thereto.

For example, the electronic device 101 may transmit, to the first external electronic device 701, third metadata 715-3 indicating that access is allowed together with the media content 515. The electronic device 101 may encrypt the media content 515 based on DRM using a secure element. For example, the electronic device 101 may change the second metadata 715-2 to the third metadata 715-3. The electronic device 101 may change the second metadata 715-2 to the third metadata 715-3 based on changing at least one piece of information included in the second metadata 715-2. The electronic device 101 may set a period of uses of the media content 515 using the secure element. The electronic device 101 may determine whether the media content 515 is re-transferable using the secure element. The electronic device 101 may determine whether the media content 515 is editable using the secure element. The electronic device 101 may transmit the encrypted media content 515 to the first external electronic device 701. The third metadata 715-3 may indicate user information and/or the period of uses corresponding to the media content 515. The first external electronic device 701 may display the media content 515 on an electronic paper display 750-1 of the first external electronic device 701 during the set period of uses. As an example, in the first external electronic device 701, since access is allowed among the access or editing for the media content 515, the editing of the media content 515 may be limited. After decoding the media content 515, the electronic device 101 may display the decoded media content 515 on the electronic paper display 150-1. In an embodiment, the decoding of the media content 515 may be based on receiving a decryption key stored in a secure element 131-1 of a server 190. In an embodiment, the decoding of the media content 515 may be based on a decryption key stored in the secure element 130-1.

Referring back to FIG. 6, in a case of not including the metadata indicating that the media content is linked to the electronic device (operation 630-NO), in operation 650, the processor according to an embodiment may obtain data for transmitting of the media content, by communicating with a second external electronic device, in response to identifying an input while including metadata indicating that the media content is linked to the second external electronic device. The second external electronic device may be referred to the server 190 of FIG. 1A. The media content being linked to the second external electronic device may include that another user distinguished from the user of the electronic device 101 has rights of the media content. For example, in a case that media content is linked to the second external electronic device, the second external electronic device may identify whether use of the media content by the first external electronic device is allowed.

Referring to FIG. 6, in operation 660, the processor according to an embodiment may determine whether to transmit the media content to the first external electronic device based on data. For example, in a case that the use of the media content by the first external electronic device is allowed, the second external electronic device may transmit data indicating that the first external electronic device is allowed to use the media content to the electronic device. The processor of the electronic device may transmit the media content to the first external electronic device based on receiving the data.

For example, in a case that the use of the media content by the first external electronic device is limited, the second external electronic device may transmit data indicating that the use of the media content by the first external electronic device is limited to the electronic device. The electronic device may not transmit the media content to the first external electronic device based on the reception of the data. However, it is not limited thereto.

Referring to FIG. 7D, the electronic device 101 according to an embodiment may identify an input indicating transmission of media content to the first external electronic device 701. For example, the input may be obtained by identifying contact of at least a portion of the electronic device 101 and at least a portion of the first external electronic device 701.

For example, the electronic device 101 may identify the first metadata 715-1 for the media content 515. The electronic device 101 may identify that the media content 515 is linked to the server 190 based on identifying the first metadata 715-1. The electronic device 101 may identify that rights to the media content 515 are controlled by another user (or an external electronic device of the other user) distinguished from a user of the electronic device 101. The electronic device 101 may transmit data indicating that the transmission of the media content 515 to the server 190 based on identifying the first metadata 715-1. The server 190 may identify whether use of the media content 515 by the first external electronic device 701 is allowed based on identifying the media content 515 and the first metadata 715-1 for the media content 515. Whether the use of the media content 515 by the first external electronic device 701 is allowed may include whether a user of the first external electronic device 701 has usage rights for the media content 515. The server 190 may transmit data indicating whether the use of the media content 515 by the first external electronic device 701 is allowed to the electronic device 101. The electronic device 101 may determine whether to transmit the media content to the first external electronic device 701 based on the data.

As described above, the electronic device 101 according to an embodiment may determine whether to transmit the media content 515 and/or the metadata corresponding to the media content 515 to the first external electronic device 701. The electronic device 101 may determine whether to transmit the media content 515 to the first external electronic device 701 according to whether the electronic device 101 has rights for the media content 515, or the server 190 has. For example, in a case that the media content 515 is linked to the electronic device 101, the electronic device 101 may transmit the media content 515 to the first external electronic device 701 together with metadata indicating that access to the media content 515 is allowed. For example, in a case that the media content 515 is linked to the server 190, the electronic device 101 may request the server 190 whether to transmit the media content 515 to the first external electronic device 701. The electronic device 101 may determine whether to transmit the media content to the first external electronic device 701 by obtaining data for the transmission of the media content 515 from the server 190.

In FIGS. 7A to 7C, it is illustrated that media content is transmitted between electronic devices 101 and 701 of the same type, but this is only an example. According to an embodiment, the media content may be transmitted between different types of electronic devices 101 and 701. For example, the media content may be transmitted between the electronic device 101 of the first type and the electronic device 701 of the second type.

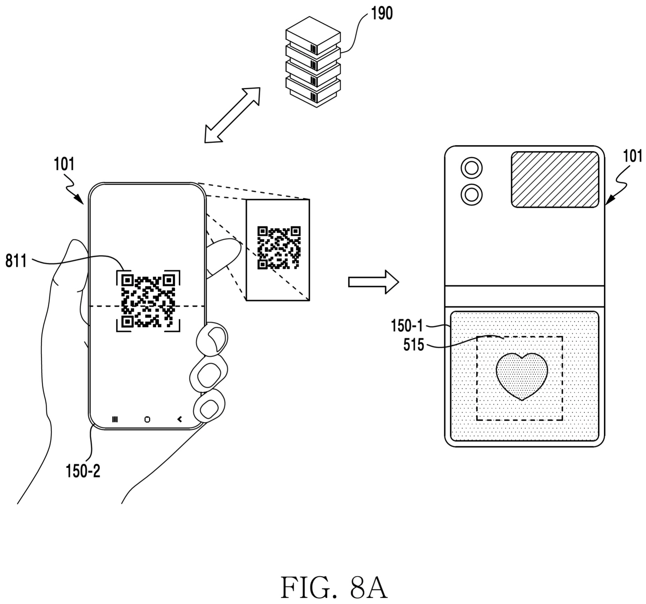

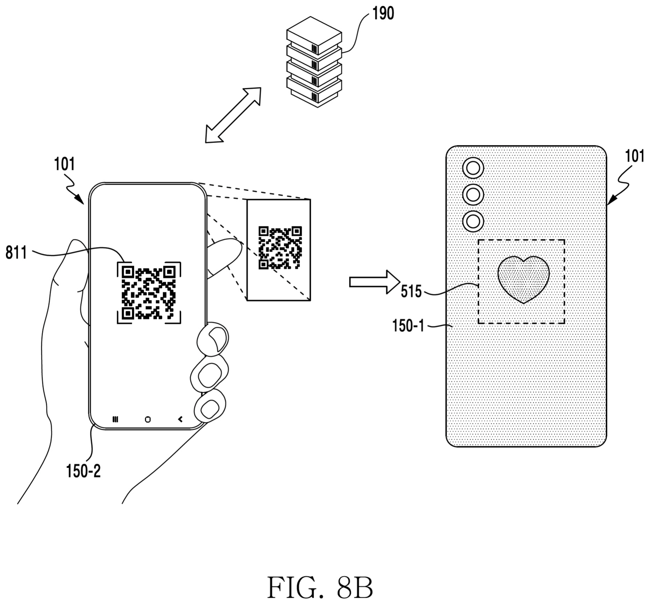

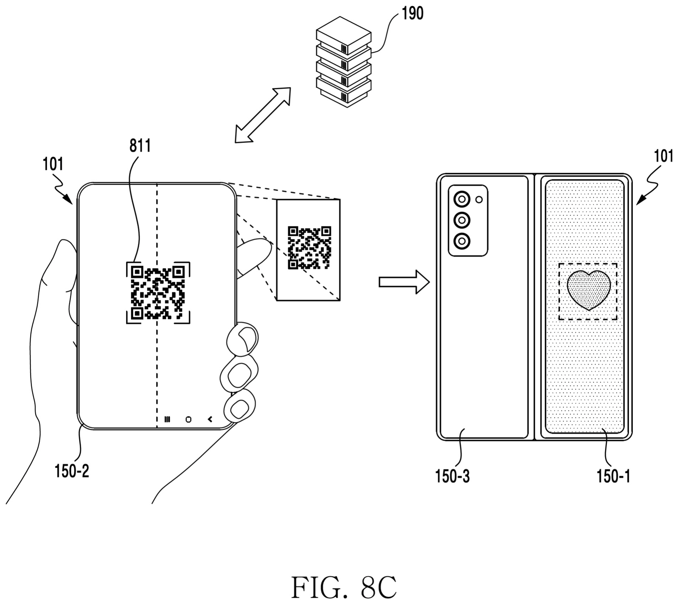

FIG. 8A illustrates an example of media content obtained based on an electronic device of a first type identifying at least one code according to an embodiment. FIG. 8B illustrates an example of media content obtained based on an electronic device of a second type identifying at least one code according to an embodiment. FIG. 8C illustrates an example of media content obtained based on an electronic device of a third type identifying at least one code according to an embodiment. An electronic device 101 of FIG. 8A may include the electronic device 101 of FIGS. 1A, 1B, 2A, 3A, 4A, 5A, and/or 6A. An electronic device 101 of FIG. 7B may include the electronic device 101 of FIGS. 1A, 1C, 2B, 3B, 4B, 5B and/or 7B. An electronic device 101 of FIG. 7C may include the electronic device 101 of FIGS. 1A, 1D, 2C, 3C, 4C, 5C, and/or 7C.

Referring to FIGS. 8A to 8C, the electronic device 101 according to an embodiment may identify at least one code information 811 using a camera. The at least one code information 811 may include information about media content 515. The electronic device 101 may communicate with a server 190 to obtain the media content 515 based on identifying the at least one code information 811 using the camera. However, it is not limited thereto. The electronic device 101 according to an embodiment may identify information indicating the media content 515 based on short-range wireless communication, independently of identifying the at least one code information using the camera. The electronic device 101 may request the server 190 to transmit the media content 515 based on identifying the information indicating the media content 515.

For example, the electronic device 101 may request the server 190 for the media content 515 corresponding to the at least one code information 811. The server 190 may identify the media content 515 corresponding to the at least one code information 811. The server 190 may identify whether use of the media content 515 by the electronic device 101 is allowed. The server 190 may identify that the use of the media content 515 by the electronic device 101 is allowed by using metadata of the media content 515. The server 190 may transmit the media content 515 to the electronic device 101 based on the identification, together with the metadata of the media content 515. The electronic device 101 may display the media content 515 on an electronic paper display 150-1 based on receiving the media content 515.

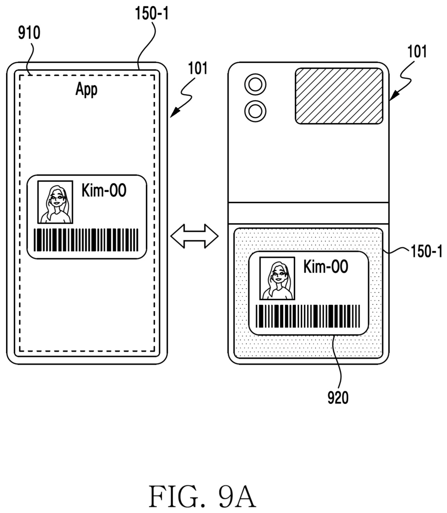

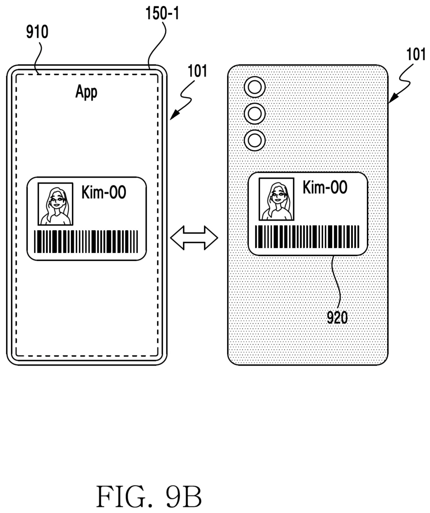

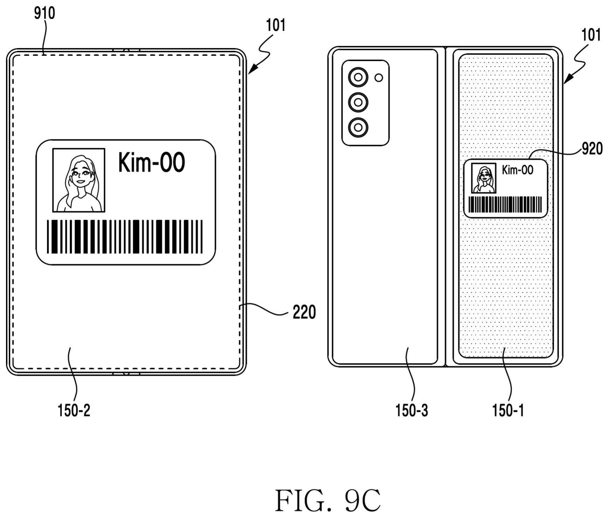

FIG. 9A illustrates an example of an operation in which an electronic device of a first type displays a visual object related to a user of the electronic device on an electronic paper display according to an embodiment. FIG. 9B illustrates an example of an operation in which an electronic device of a second type displays a visual object related to a user of the electronic device on an electronic paper display according to an embodiment. FIG. 9C illustrates an example of an operation in which an electronic device of a third type displays a visual object related to a user of the electronic device on an electronic paper display according to an embodiment. An electronic device 101 of FIG. 9A may include the electronic device 101 of FIGS. 1A, 1B, 2A, 3A, 4A, 5A, 7A, and/or 8A. An electronic device 101 of FIG. 9B may include the electronic device 101 of FIGS. 1A, 1C, 2B, 3B, 4B, 5B, 7B, and/or 8B. An electronic device 101 of FIG. 7C may include the electronic device 101 of FIGS. 1A, 1D, 2C, 3C, 4C, 5C, 7C, and/or 8C.

Referring to FIGS. 9A to 9C, the electronic device 101 according to an embodiment may display a screen 910 for obtaining media content 920 to be displayed on an electronic paper display 150-1 on a display 150-3. The electronic device 101 may set a condition for displaying the media content 920 using the screen 910. The condition may include a location where the media content 920 is to be displayed on the electronic paper display 150-1, and/or time for displaying the media content 920.

For example, the media content 920 may include information about a user of the electronic device 101. For example, the media content 920 may include information for identifying the user. As an example, the media content 920 may indicate an ID, an employee ID, and/or a license.

For example, the media content 920 may include information related to the user of electronic device 101. For example, the media content 920 may indicate an airplane ticket or a train ticket purchased by the user of the electronic device 101 using at least one software application. However, it is not limited thereto. For example, the media content 920 may include code information (e.g., a QR code, and/or a barcode).

As described above, the electronic device 101 according to an embodiment may assist convenience for a daily life of the user by displaying the media content 920 related to the user on the electronic paper display 150-1.

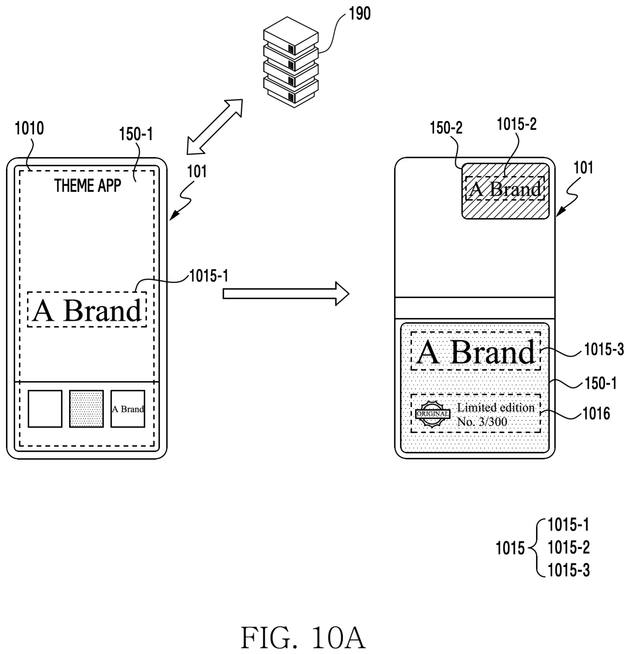

Referring to FIGS. 10A to 10C, an example of an operation in which the electronic device 101 displays one or more media contents related to a theme on one or more displays will be described later.

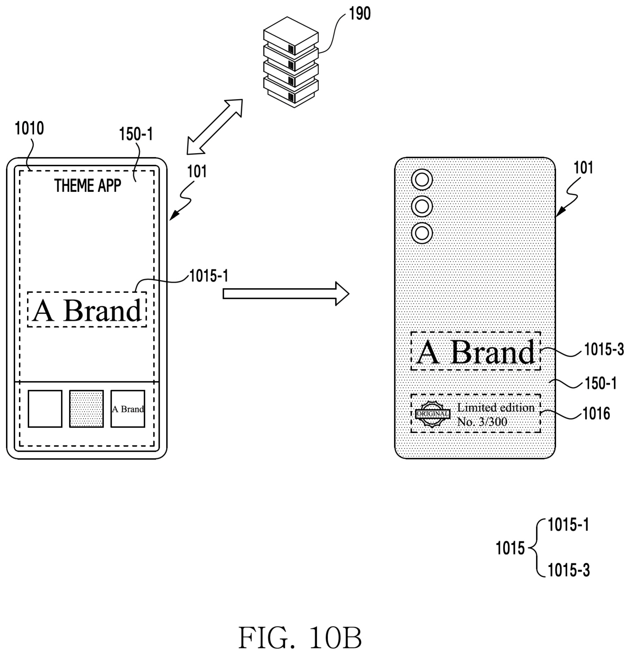

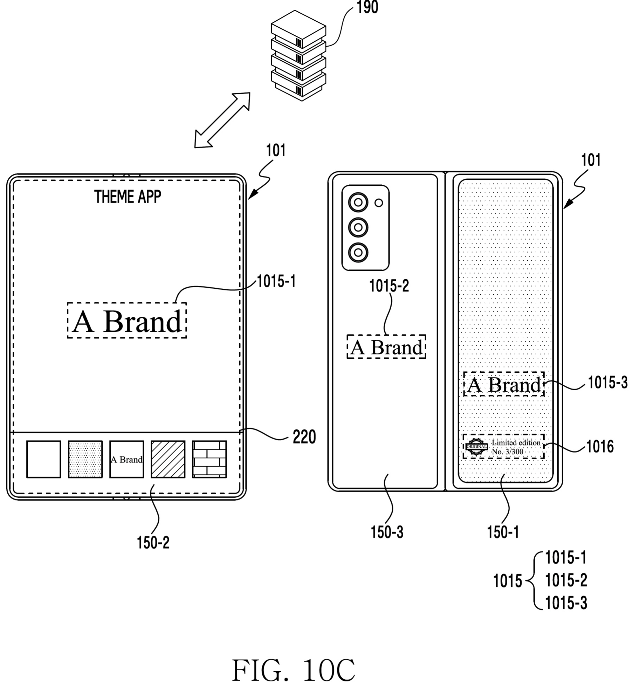

FIG. 10A illustrates an example of visual objects in which an electronic device of a first type displays according to an embodiment. FIG. 10B illustrates an example of visual objects in which an electronic device of a second type displays according to an embodiment. FIG. 10C illustrates an example of visual objects in which an electronic device of a third type displays according to an embodiment. An electronic device 101 of FIG. 10A may include the electronic device 101 of FIGS. 1A, 1B, 2A, 3A, 4A, 5A, 7A, 8B, and/or 9A. An electronic device 101 of FIG. 10B may include the electronic device 101 of FIGS. 1A, 1C, 2B, 3B, 4B, 5B, 7B, 8B, and/or 9B. An electronic device 101 of FIG. 10A may include the electronic device 101 of FIGS. 1A, 1D, 2C, 3C, 4C, 5C, 6C, 8C, and/or 9C.

Referring to FIGS. 10A to 10C, the electronic device 101 according to an embodiment may display one or more media contents on a display 150 by communicating with a server 190. The server 190 may provide a theme service for managing the one or more media contents to be displayed on the display 150.

For example, the electronic device 101 may display a screen 1010 on a display (e.g., a display 150-2) based on execution of a software application for using the theme service. The software application may be an example of a theme store application that sells a theme for decorating a graphic interface of the electronic device 101.

For example, the electronic device 101 may receive an input indicating that selection of a type of media content to be displayed on the display using the screen 1010. For example, the electronic device 101 may identify a type of media content 1015-1 based on the input. The electronic device 101 may identify media contents 1015-2 and 1015-3 related to the media content 1015-1 based on identifying the type of the media content 1015-1.

For example, the electronic device 101 may identify an input indicating purchase of the media content 1015-1. The electronic device 101 may transmit a request for granting rights for the media content 1015-1 to the electronic device 101 (or a user of the electronic device 101) based on identifying the input to the server 190.

For example, the server 190 may perform encryption on media content 1015 using a secure element by receiving the request. The server 190 may perform the encryption so that the electronic device 101 may not transmit the media content 1015 to another external electronic device. The server 190 may encrypt the media content 1015 based on DRM. The server 190 may transmit the encrypted media content 1015 to the electronic device 101. The server 190 may transmit, together with the media content 1015, a visual object 1016 indicating that use of the media content 1015 by the electronic device 101 is allowed to the electronic device 101. The visual object 1016 may indicate that the electronic device 101 (or the user of the electronic device 101) has rights of the media content 1015. As an example, the visual object 1016 may indicate the encrypted media content 1015 based on the DRM. For example, the visual object 1016 may indicate identification information (e.g., a limited edition number) for identifying the media content 1015. For example, the electronic device 101 may display the media content 1015-3 and/or the visual object 1016 on an electronic paper display 150-1. The electronic device 101 may decode the media content 1015-3 and/or the visual object 1016 and then display the decoded media content 1015-3 and/or the visual object 1016 on the electronic paper display 150-1. In an embodiment, decoding of the media content 1015-3 and/or the visual object 1016 may be based on receiving a decryption key stored in a secure element 131-1 of the server 190. In an embodiment, the decoding of the media content 1015-3 and/or the visual object 1016 may be based on a decryption key stored in a secure element 130-1.

For example, the electronic device 101 may display each of the media contents 1015-1, 1015-2, and 1015-3 on the display 150 based on receiving the media content 1015. The electronic device 101 may display the media content 1015-3 on the electronic paper display 150-1. The media content 1015-3 may be an example of media content related to other media content (e.g., the media content 1015-1 or the media content 1015-2) displayed on at least one of a cover display 150-3 or the display 150-2. The media content 1015 may be an example of media content obtained based on one theme. The electronic device 101 may provide a graphic interface based on a sense of unity to the user by displaying each of the media contents 1015-1, 1015-2, and 1015-3 on the display 150.

The electronic device 101 according to an embodiment may identify at least one code information included in an actual object purchased by the user of the electronic device 101 using a camera. The electronic device 101 may identify the media content 1015 by using the at least one code information. The electronic device 101 may identify whether the user may access the media content 1015 based on identification of the at least one code information. The electronic device 101 may request the server 190 whether the user may access the media content 1015 based on the identification of at least one code information.

For example, the server 190 may store user information that purchased the actual object in metadata for the media content 1015. In response to the request, the server 190 may identify whether the electronic device 101 (or a user account logged in the electronic device 101) has the rights for the media content 1015, using the metadata. The server 190 may store information indicating that the media content 1015 is linked to the electronic device 101 in metadata by using a secure element. The server 190 may transmit the media content 1015 together with the metadata to the electronic device 101. The electronic device 101 may display the media content 1015 on the display.

The electronic device 101 according to an embodiment may transfer the rights for the media content 1015 to another external electronic device (or a user of the external electronic device) different from the electronic device 101.

For example, the electronic device 101 may sell the rights for the media content 1015 using the software application to provide the theme service. In a case that the rights for the media content 1015 are sold, the electronic device 101 may transfer the rights for the media content 1015 to an external electronic device (or a user of the external electronic device) that purchased the rights for the media content 1015.

For example, the electronic device 101 may store the information indicating that the media content 1015 is linked to the external electronic device in the metadata using the secure element. For example, the electronic device 101 may transmit data indicating that the rights for the media content 1015 are sold, to the server 190. Based on the data, the server 190 may identify that the rights for the media content 1015 are transferred from the electronic device 101 to the other external electronic device different from the electronic device. For example, the server 190 may encrypt the media content 1015 based on DRM based on the identification. The server 190 may change the metadata of the media content 1015 by using the information indicating that the media content 1015 is linked to the external electronic device based on the identification.

For example, the server 190 may transmit data indicating the encrypted media content to the electronic device 101 and/or the external electronic device. The server 190 may transmit data indicating that use of the media content 1015 is limited to the electronic device 101. The server 190 may transmit data indicating that use of the media content 1015 is allowed to the external electronic device. For example, in the electronic device 101, the use of media content 1015 based on transferring the rights for the media content 1015 to the external electronic device, may be limited. For example, the electronic device 101 may temporarily refrain from displaying the media content 1015 on the display based on transferring the rights for the media content 1015 to the external electronic device. However, it is not limited thereto.

FIG. 11 illustrates an example of a flowchart indicating an operation of an electronic device according to an embodiment. An electronic device 101 of FIG. 11 may include the electronic device 101 of FIGS. 1A to 10C. At least one of operations of FIG. 11 may be performed by the electronic device 101 of FIG. 1A and/or the processor 120 of FIG. 1A. Each of the operations of FIG. 11 may be performed sequentially, but is not necessarily performed sequentially. For example, an order of each of the operations may be changed, and at least two operations may be performed in parallel.

Referring to FIG. 11, in operation 1110, a processor according to an embodiment may identify a contact between at least a portion of the electronic device and at least a portion of an external electronic device while temporarily refraining from a power signal transmitted to an electronic paper display after displaying media content on the electronic paper display. Based on identifying the contact, the processor may receive an input indicating transmission of the media content using communication circuitry (e.g., short-range wireless communication circuitry).

Referring to FIG. 11, in operation 1120, the processor according to an embodiment may receive, from the external electronic device, a signal requesting display of media content on another electronic paper display (or at least one display) of the external electronic device corresponding to the electronic paper display using the communication circuitry, based on identifying the contact between the at least a portion of the electronic device and the at least a portion of the external electronic device (e.g., the first external electronic device 701 of FIG. 7A). The external electronic device may be one of the electronic devices according to the types of FIGS. 1B to 1D. However, it is not limited thereto. The processor may receive a signal requesting the media content to be displayed on the electronic paper display of the external electronic device from the external electronic device. For example, the media content may include metadata indicating rights of the media content. The processor may identify that the media content is linked to the electronic device by using the metadata. The processor may identify that the electronic device (or a user of the electronic device) has the rights of the media content by using the metadata.

Referring to FIG. 11, in operation 1130, the processor according to an embodiment may encrypt the media content using a secure element stored in memory to transmit the media content to the external electronic device based on receiving the signal. The processor may encrypt the media content based on DRM. For example, the processor may change the metadata using information indicating that access is allowed among the access or editing for the media content. For example, the processor may change the metadata using information indicating that limitation of transfer for the media content.

Referring to FIG. 11, in operation 1140, the processor according to an embodiment may transmit the encrypted media content to the external electronic device through the communication circuitry. As an example, the processor may transmit a decryption key for accessing the media content to the external electronic device. For example, the external electronic device may display the encrypted media content on the electronic paper display of the external electronic device. For example, a visual object indicating the encrypted media content may be displayed on the electronic paper display. As an example, in order for the external electronic device to transmit the media content to another external electronic device, the external electronic device may request a server (e.g., server 190 of FIG. 1A) whether the other external electronic device has rights for the media content. However, it is not limited thereto.

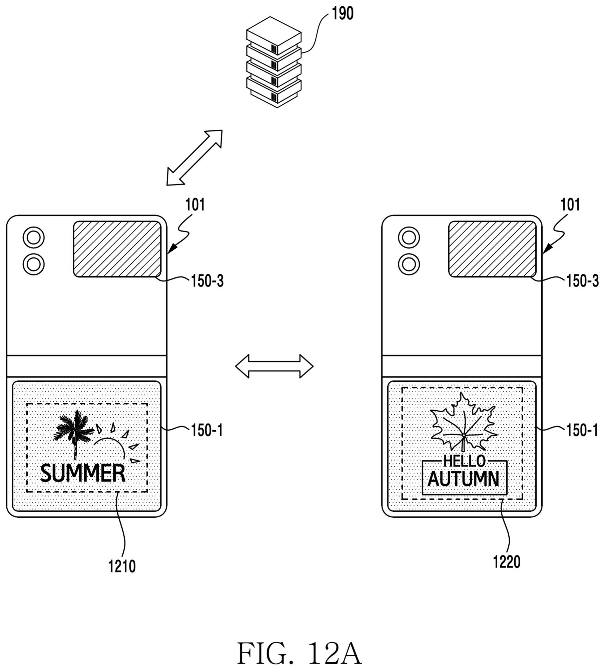

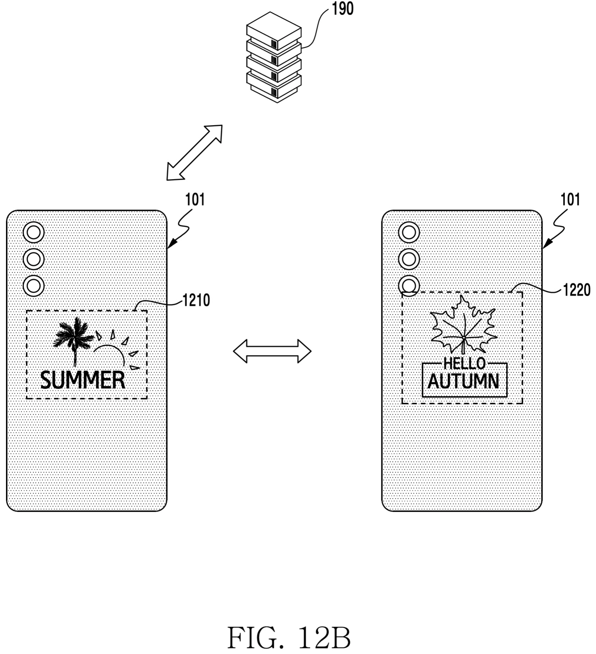

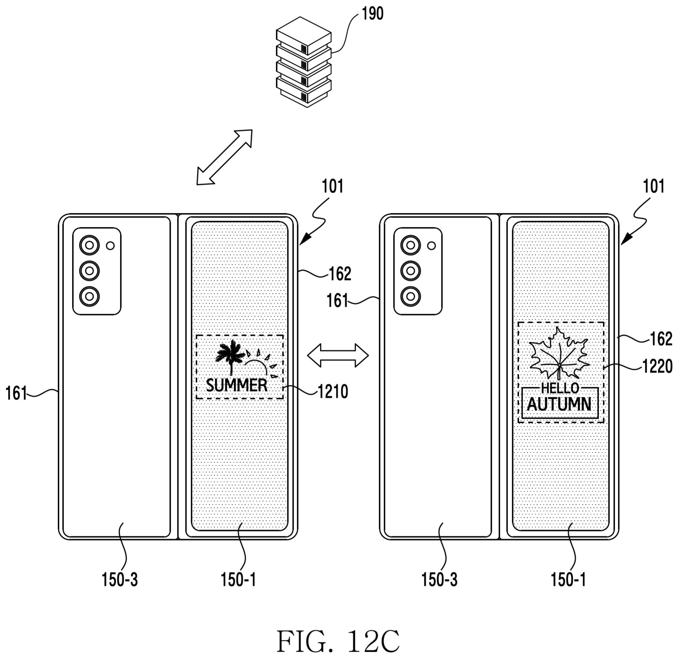

FIG. 12A illustrates an example of visual objects in which an electronic device of a first type displays according to an embodiment. FIG. 12B illustrates an example of visual objects in which an electronic device of a second type displays according to an embodiment. FIG. 12C illustrates an example of visual objects in which an electronic device of a third type displays according to an embodiment. An electronic device 101 of FIG. 12A may include the electronic device 101 of FIGS. 1A, 1B, 2A, 3A, 4A, 5A, 7A, 8A, 9A, and/or 10A. An electronic device 101 of FIG. 12B may include the electronic device 101 of FIGS. 1A, 1C, 2B, 3B, 4B, 5B, 7B, 8B, 9B, and/or 10B. An electronic device 101 of FIG. 12A may include the electronic device 101 of FIGS. 1A, 1D, 2C, 3C, 4C, 5C, 6C, 8C, 9C, and/or 10C.

Referring to FIGS. 12A to 12C, the electronic device 101 according to an embodiment may display one or more media contents on a display 150 by communicating with a server 190. The server 190 may provide a theme service for managing the one or more media contents to be displayed on the display 150.

For example, the electronic device 101 may display media content 1210 on the display 150 based on receiving the media content 1210 from the server 190. The electronic device 101 may display the media content 1210 on an electronic paper display 150-1.

The electronic device 101 according to an embodiment may update the media content 1210 displayed on an electronic paper display (e.g., the electronic paper display 150-1) by communicating with the server 190. For example, the server 190 may transmit data for updating the media content 1210 displayed on the electronic paper display (e.g., the electronic paper display 150-1), to the electronic device 101, according to a change in a situation.

In an embodiment, the situation may include an update of a theme. In an embodiment, in a case that the theme applied to the electronic device 101 is updated, the server 190 may transmit media content 1220 for updating the media content 1210 displayed on the electronic paper display 150-1 to the electronic device 101.

In an embodiment, the situation may include a change in a display condition of the media contents that may be displayed through the theme. In an embodiment, the display condition may include a time condition, a seasonal condition, a date (e.g., a day, a week, or a month) condition, an event (e.g., a national holiday, a holiday, a vacation, a travel, or a game) condition, and/or a region condition.

For example, the time condition may classify the media contents that may be displayed through the theme into media contents that may be displayed according to a time section. For example, the time section may be divided into morning time and afternoon time, meal time and other times, working time and break times. However, it is not limited thereto. In an embodiment, in a case that a current time is out of a time section set for the media content 1210 displayed on the electronic paper display 150-1 through the theme applied to the electronic device 101, the server 190 may transmit the media content 1220 that may be displayed in the current time section among media contents that may be displayed through the theme to the electronic device 101.

For example, the seasonal condition may classify the media contents that may be displayed through the theme into media contents that may be displayed according to seasons (e.g., spring, summer, fall, winter) (or 24 seasons). In an embodiment, in a case that the current date is out of a season set for the media content 1210 displayed on the electronic paper display 150-1 through the theme applied to the electronic device 101, the server 190 may transmit the media content 1220 that may be displayed in a current season among the media contents that may be displayed through the theme to the electronic device 101.

For example, the date (e.g., the day, the week, or the month) condition may classify the media contents that may be displayed through the theme into media contents that may be displayed according to a date (e.g., the day, the week, or the month). In an embodiment, in a case that the current date is out of a date (e.g., the day, the week, or the month) set for the media content 1210 displayed on the electronic paper display 150-1 through the theme applied to the electronic device 101, the server 190 may transmit the media content 1220 that may be displayed on the current date (e.g., the day, the week, or the month) among the media contents that may be displayed through the theme to the electronic device 101.

For example, the event (e.g., the national holiday, the holiday, the vacation, the travel, or the game) condition may classify the media contents that may be displayed through the theme into media contents that may be displayed according to an event (e.g., the national holiday, the holiday, the vacation, the travel, or the game). In an embodiment, in a case that the current date is out of a schedule set for the media content 1210 displayed on the electronic paper display 150-1 through the theme applied to the electronic device 101, the server 190 may transmit the media content 1220 that may be displayed on the schedule of the current event (e.g., the national holiday, the holiday, the vacation, the travel, or the game) among the media contents that may be displayed through the theme to the electronic device 101.

For example, the region condition may classify the media contents that may be displayed through the theme into media contents that may be displayed according to a region. In an embodiment, in a case that a current location of the electronic device 101 is out of a region set for the media content 1210 displayed on the electronic paper display 150-1 through the theme applied to the electronic device 101, the server 190 may transmit the media content 1220 that may be displayed on the current location among the media contents that may be displayed through the theme to the electronic device 101.

For example, the electronic device 101 may display the media content 1220 on the display 150 based on receiving the media content 1220. The electronic device 101 may display the media content 1220 on the electronic paper display 150-1.

As described above, the electronic device 101 may update the media content 1210 displayed on the electronic paper display 150-1 according to a change in a theme and/or a change in a situation (or a condition). Accordingly, as the media content 1210 is changed according to the change in the theme and/or the change in the situation (or the condition) without intervention of the user, an effort of the user to change the media content may be reduced.

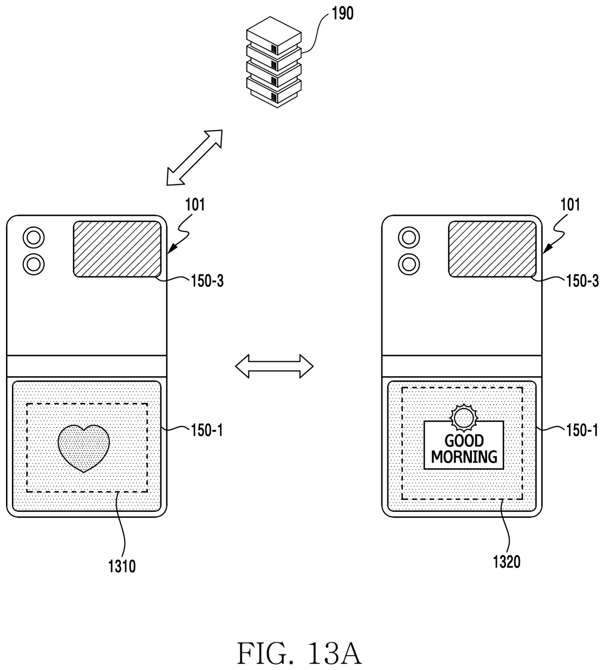

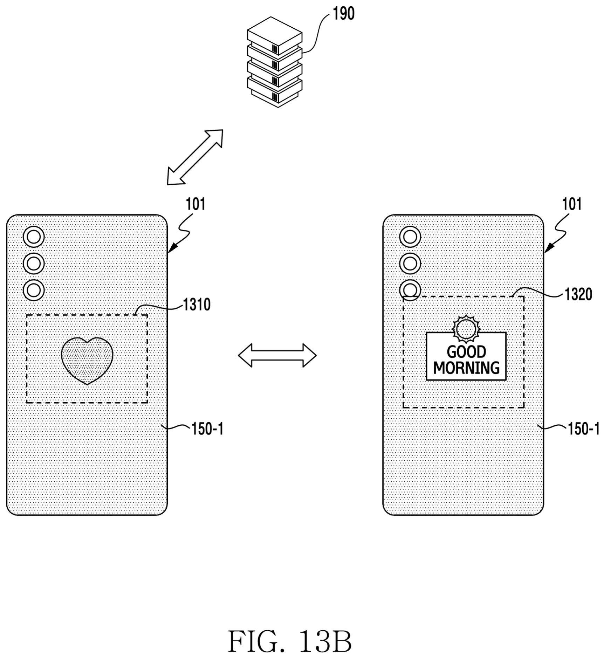

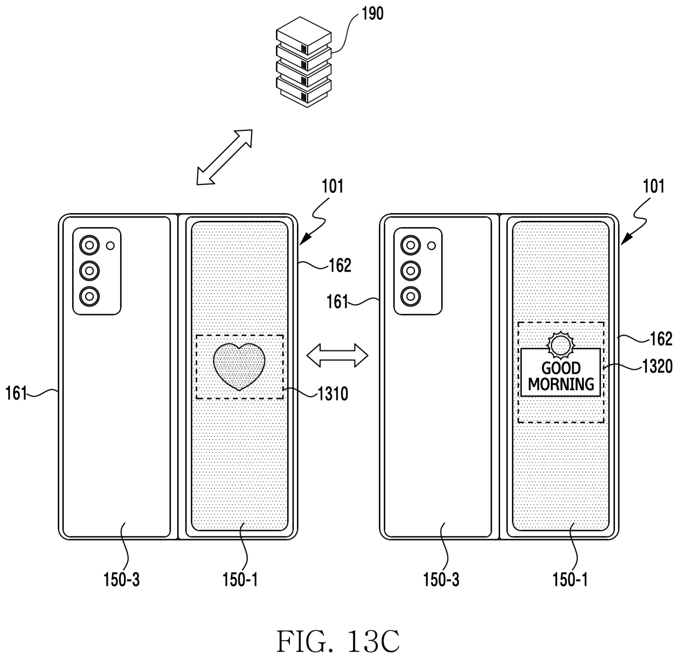

FIG. 13A illustrates an example of visual objects in which an electronic device of a first type displays according to an embodiment. FIG. 13B illustrates an example of visual objects in which an electronic device of a second type displays according to an embodiment. FIG. 13C illustrates an example of visual objects in which an electronic device of a third type displays according to an embodiment. An electronic device 101 of FIG. 13A may include the electronic device 101 of FIGS. 1A, 1B, 2A, 3A, 4A, 5A, 7A, 8B, 9A, 10A, and/or 12A. An electronic device 101 of FIG. 13B may include the electronic device 101 of FIGS. 1A, 1C, 2B, 3B, 4B, 5B, 7B, 8B, 9B, 10B, and/or 12B. An electronic device 101 of FIG. 13A may include the electronic device 101 of FIGS. 1A, 1D, 2C, 3C, 4C, 5C, 6C, 8C, 9C, 10C, and/or 12C.

Referring to FIGS. 13A to 13C, the electronic device 101 according to an embodiment may display one or more media contents on a display 150 by communicating with a server 190. The server 190 may provide a theme service for managing the one or more media contents to be displayed on the display 150.

For example, the electronic device 101 may display media content 1310 on the display 150 based on receiving the media content 1310 from the server 190. The electronic device 101 may display the media content 1310 on an electronic paper display 150-1.

In an embodiment, the electronic device 101 may update the media content 1310 displayed on the electronic paper display (e.g., the electronic paper display 150-1) according to a designated condition. In an embodiment, a condition may include a time condition. For example, the electronic device 101 may update the media content 1310 to media content 1320 for a time section designated by a user. For example, the media content 1320 may include information related to a schedule of the electronic device 101. For example, the media content 1320 may include information related to a schedule designated by the user. As an example, the media content 1320 may indicate a flight time, a commute-to-work time, a commute-from-work time, and/or an appointment time. For example, the media content 1320 may include schedule information related to the user of the electronic device 101. As an example, the media content 1320 may indicate time related to an airplane ticket and/or time related to a train ticket purchased by the user of the electronic device 101 using at least one software application. However, it is not limited thereto.

In an embodiment, data for updating the media content 1310 may be obtained from the server 190. However, it is not limited thereto. The data for updating the media content 1310 may be in a state that is pre-stored in memory 130 of the electronic device 101.

In an embodiment, the electronic device 101 may display the media content 1320 on the display 150-1 instead of the media content 1310 displayed on the display 150-1 in a case that a current time enters the designated time section. In an embodiment, the electronic device 101 may display the media content 1310 again on the display 150-1 instead of the media content 1320 displayed on the display 150-1 in a case that the current time is out of the designated time section.

As described above, the electronic device 101 may update the media content 1310 displayed on the electronic paper display 150-1 according to the time set by the user. Accordingly, as the media content 1310 is changed according to a time condition of the user, an effort of the user to change the media content may be reduced.

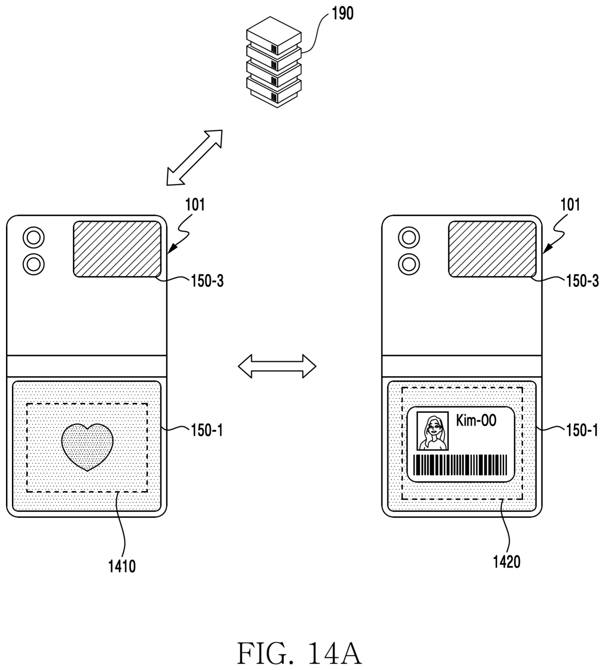

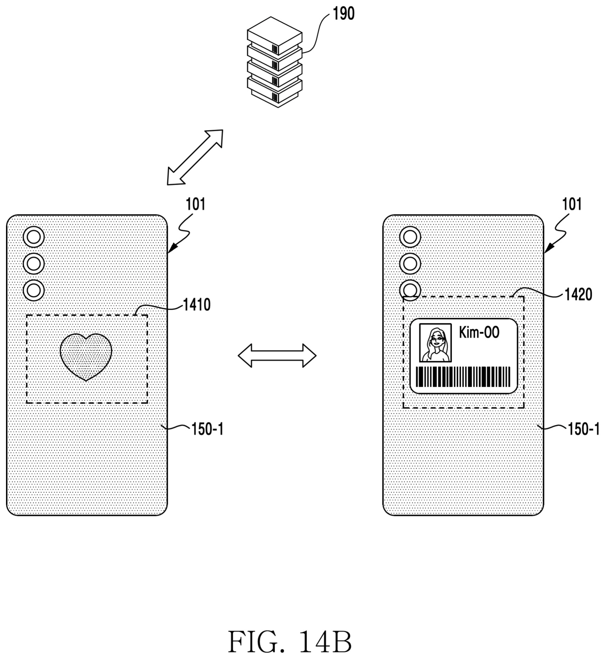

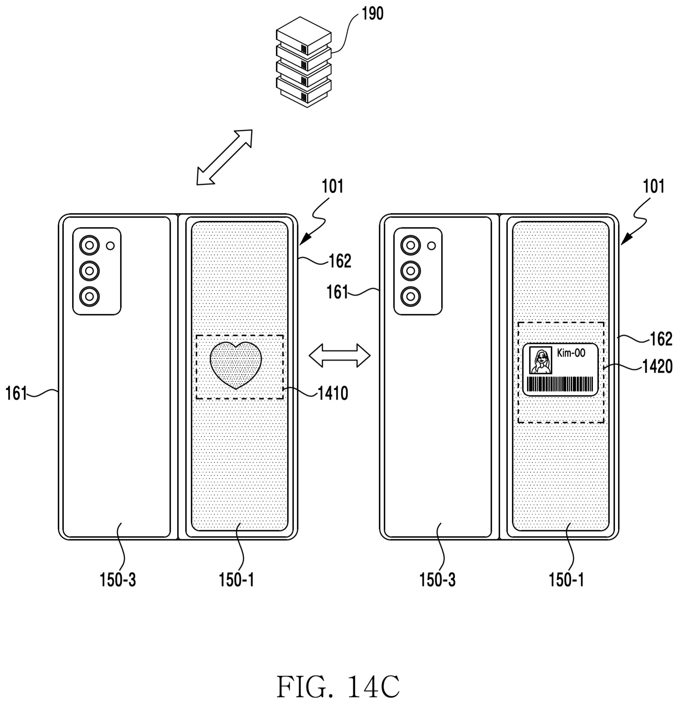

FIG. 14A illustrates an example of visual objects in which an electronic device of a first type displays according to an embodiment. FIG. 14B illustrates an example of visual objects in which an electronic device of a second type displays according to an embodiment. FIG. 14C illustrates an example of visual objects in which an electronic device of a third type displays according to an embodiment. An electronic device 101 of FIG. 14A may include the electronic device 101 of FIGS. 1A, 1B, 2A, 3A, 4A, 5A, 7A, 8B, 9A, 10A, 12A, and/or 13A. An electronic device 101 of FIG. 14B may include the electronic device 101 of FIGS. 1A, 1C, 2B, 3B, 4B, 5B, 7B, 8B, 9B, 10B, 12B, and/or 13B. An electronic device 101 of FIG. 14A may include the electronic device 101 of FIGS. 1A, 1D, 2C, 3C, 4C, 5C, 6C, 8C, 9C, 10C, 12C, and/or 13C.

Referring to FIGS. 14A to 14C, the electronic device 101 according to an embodiment may display one or more media contents on a display 150 by communicating with a server 190. The server 190 may provide a theme service for managing the one or more media contents to be displayed on the display 150.

For example, the electronic device 101 may display media content 1410 on display 150 based on receiving the media content 1410 from the server 190. The electronic device 101 may display the media content 1410 on an electronic paper display 150-1.

In an embodiment, the electronic device 101 may update (or change) the media content 1410 displayed on an electronic paper display (e.g., the electronic paper display 150-1) according to a designated condition (or event). In an embodiment, a condition may include a location condition. For example, the electronic device 101 may update (or change) the media content 1410 to media content 1420 within a region (or a location range) designated by the user. For example, the media content 1420 may include information on a user of the electronic device 101. For example, the media content 1420 may include information for identifying the user. For example, the media content 1420 may indicate an ID, an employee ID, a ticket (e.g., an airplane ticket), and/or a license. For example, the media content 1420 may include information related to the user of electronic device 101. For example, the media content 1420 may indicate an airplane ticket or a train ticket purchased by the user of the electronic device 101 using at least one software application. However, it is not limited thereto. For example, the media content 1420 may include code information (e.g., a QR code, and/or a barcode).

In an embodiment, data for updating the media content 1410 may be obtained from the server 190. However, it is not limited thereto. The data for updating the media content 1410 may be in a state that is pre-stored in memory 130 of the electronic device 101. The data for updating the media content 1410 may be in a state that is pre-stored in memory 130 in an encrypted state. In an embodiment, a decryption key may be stored in a secure element 131. In an embodiment, the decryption key may be accessed based on a user input (e.g., biometric data, or a password) for authenticating the user. For example, the decryption key may be accessed based on the user being authenticated.

In an embodiment, the electronic device 101 may display the media content 1420 on the display 150-1 instead of the media content 1410 displayed on the display 150-1 in a case that a current location enters the designated region (or the location range) (e.g., a company, an airport, a performance hall, or a platform). In an embodiment, the electronic device 101 may display the media content 1410 again on the display 150-1 instead of the media content 1420 displayed on the display 150-1 in a case that the current location is out of the designated region (or the location range).

As described above, the electronic device 101 may update the media content 1410 displayed on the electronic paper display 150-1 according to a location range set by the user. Accordingly, as the media content 1410 is changed according to a region condition of the user, an effort of the user to change the media content may be reduced.

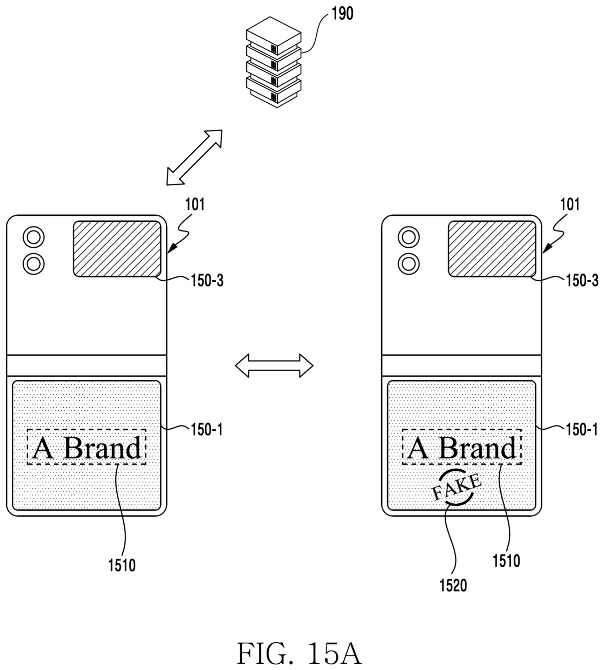

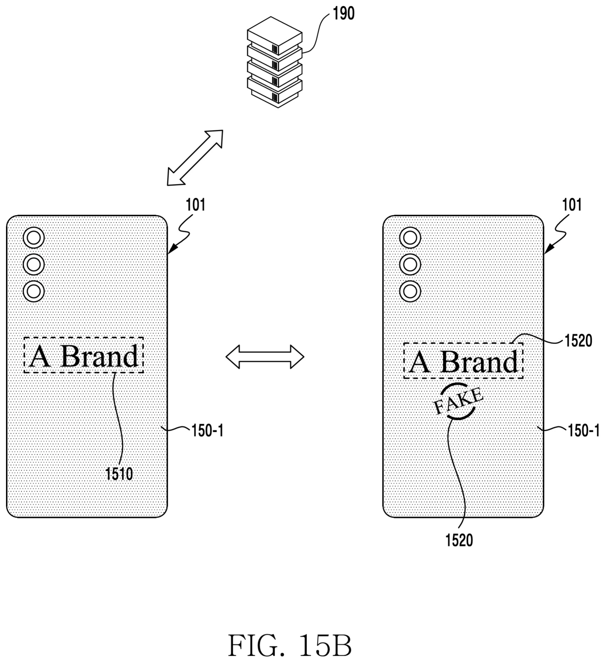

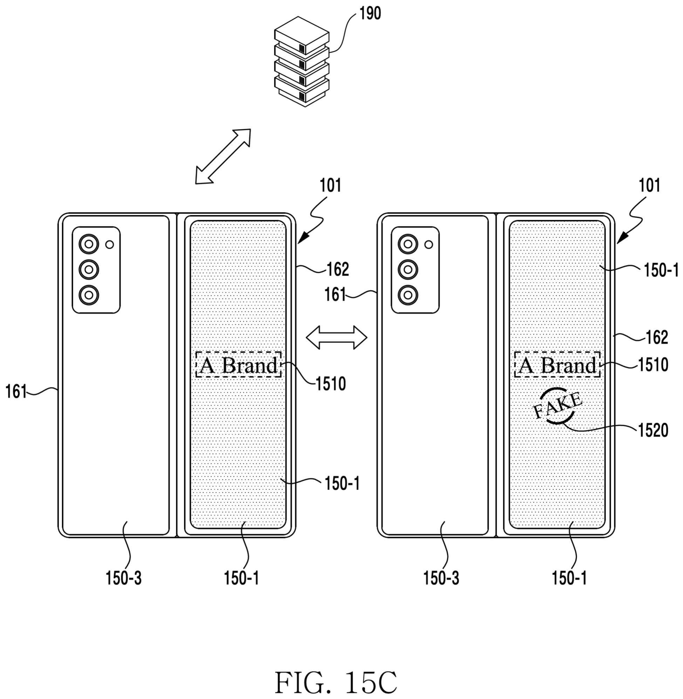

FIG. 15A illustrates an example of visual objects in which an electronic device of a first type displays according to an embodiment. FIG. 15B illustrates an example of visual objects in which an electronic device of a second type displays according to an embodiment. FIG. 15C illustrates an example of visual objects in which an electronic device of a third type displays according to an embodiment. An electronic device 101 of FIG. 15A may include the electronic device 101 of FIGS. 1A1B, 2A, 3A, 4A, 5A, 7A, 8B, 9A, 10A, 12A, 13A, and/or 14A. An electronic device 101 of FIG. 15B may include the electronic device 101 of FIGS. 1A, 1C, 2B, 3B, 4B, 5B, 7B, 8B, 9B, 10B, 12B, 13B, and/or 14B. An electronic device 101 of FIG. 15A may include the electronic device 101 of FIGS. 1A, 1D, 2C, 3C, 4C, 5C, 6C, 8C, 9C, 10C, 12C, 13C, and/or 14C.

Referring to FIGS. 15A to 15C, the electronic device 101 according to an embodiment may display one or more media contents on a display 150 by communicating with a server 190. In an embodiment, the one or more media contents may not be related to a theme service provided by the server 190.

In an embodiment, the electronic device 101 may display media content 1510 on the display 150. The electronic device 101 may display the media content 1510 on an electronic paper display 150-1. In an embodiment, the media content 1510 may not be related to the theme service provided by the server 190.

In an embodiment, the electronic device 101 may transmit data indicating the media content 1510 to the server 190 based on displaying the media content 1510 on the display 150.

In an embodiment, the server 190 may analyze the media content 1510 received from the electronic device 101. For example, the server 190 may identify whether the media content 1510 is media content registered in a user account of the electronic device 101. For example, the server 190 may identify rights of the user for the media content 1510. For example, the server 190 may identify whether the media content 1510 is genuine media content. For example, the genuine media content may be media content purchased by the user of the electronic device 101 through a formal sales channel.

In an embodiment, the server 190 may identify whether the media content 1510 is fake media content in a case that the media content 1510 is not registered in the user account of the electronic device 101 or does not have the rights of the user for the media content 1510. For example, the server 190 may determine whether the media content 1510 is the same (or substantially the same) as at least one of one or more genuine media contents by comparing the media content 1510 with the one or more genuine media contents. For example, the server 190 may determine that the media content 1510 is fake media content in a case of including a genuine logo. For example, the server 190 may determine that it is fake media content in a case that the media content 1510 includes genuine media content, or a portion of the genuine media content.

In an embodiment, the server 190 may transmit the media content 1520 to warn the electronic device 101 of copyright infringement in a case that the media content 1510 is not registered in the user account of the electronic device 101, or in a case that the media content 1510 does not have rights of the user for the media content 1510 and the media content 1510 is fake media content.

In an embodiment, the electronic device 101 may display the media content 1520 together with the media content 1510 on the display 150-1.

As described above, the electronic device 101 may display the displayed media content 1520 for warning copyright infringement according to whether the media content displayed by the user is genuine. Accordingly, damage (or infringement of rights with respect to a rights holder) caused by the copyright infringement of the user may be prevented.

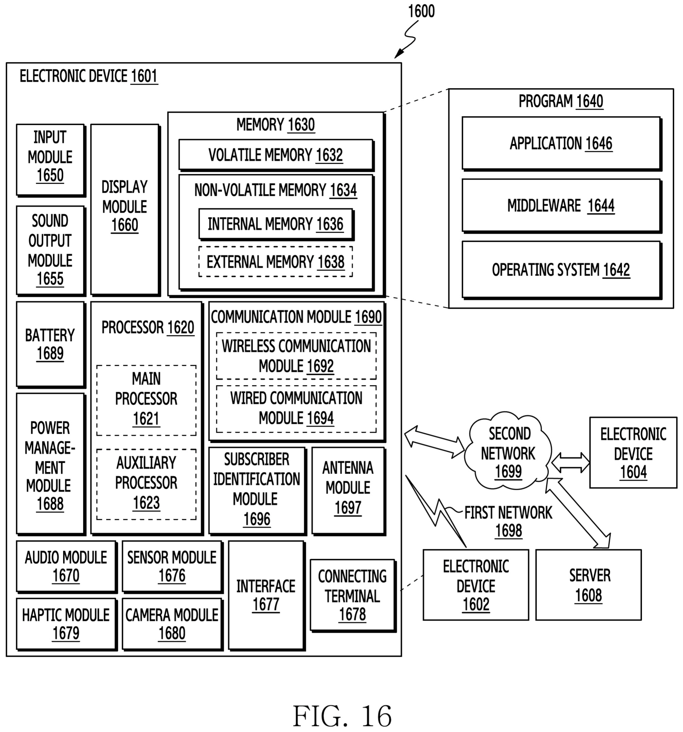

FIG. 16 is a block diagram illustrating an electronic device 1601 in a network environment 1600 according to various embodiments. Referring to FIG. 16, the electronic device 1601 in the network environment 1600 may communicate with an electronic device 1602 via a first network 1698 (e.g., a short-range wireless communication network), or at least one of an electronic device 1604 or a server 1608 via a second network 1699 (e.g., a long-range wireless communication network). According to an embodiment, the electronic device 1601 may communicate with the electronic device 1604 via the server 1608. According to an embodiment, the electronic device 1601 may include a processor 1620, memory 1630, an input module 1650, a sound output module 1655, a display module 1660, an audio module 1670, a sensor module 1676, an interface 1677, a connecting terminal 1678, a haptic module 1679, a camera module 1680, a power management module 1688, a battery 1689, a communication module 1690, a subscriber identification module(SIM) 1696, or an antenna module 1697. In some embodiments, at least one of the components (e.g., the connecting terminal 1678) may be omitted from the electronic device 1601, or one or more other components may be added in the electronic device 1601. In some embodiments, some of the components (e.g., the sensor module 1676, the camera module 1680, or the antenna module 1697) may be implemented as a single component (e.g., the display module 1660).

The processor 1620 may execute, for example, software (e.g., a program 1640) to control at least one other component (e.g., a hardware or software component) of the electronic device 1601 coupled with the processor 1620, and may perform various data processing or computation. According to an embodiment, as at least part of the data processing or computation, the processor 1620 may store a command or data received from another component (e.g., the sensor module 1676 or the communication module 1690) in volatile memory 1632, process the command or the data stored in the volatile memory 1632, and store resulting data in non-volatile memory 1634. According to an embodiment, the processor 1620 may include a main processor 1621 (e.g., a central processing unit (CPU) or an application processor (AP)), or an auxiliary processor 1623 (e.g., a graphics processing unit (GPU), a neural processing unit (NPU), an image signal processor (ISP), a sensor hub processor, or a communication processor (CP)) that is operable independently from, or in conjunction with, the main processor 1621. For example, when the electronic device 1601 includes the main processor 1621 and the auxiliary processor 1623, the auxiliary processor 1623 may be adapted to consume less power than the main processor 1621, or to be specific to a specified function. The auxiliary processor 1623 may be implemented as separate from, or as part of the main processor 1621.

The auxiliary processor 1623 may control at least some of functions or states related to at least one component (e.g., the display module 1660, the sensor module 1676, or the communication module 1690) among the components of the electronic device 1601, instead of the main processor 1621 while the main processor 1621 is in an inactive (e.g., sleep) state, or together with the main processor 1621 while the main processor 1621 is in an active state (e.g., executing an application). According to an embodiment, the auxiliary processor 1623 (e.g., an image signal processor or a communication processor) may be implemented as part of another component (e.g., the camera module 1680 or the communication module 1690) functionally related to the auxiliary processor 1623. According to an embodiment, the auxiliary processor 1623 (e.g., the neural processing unit) may include a hardware structure specified for artificial intelligence model processing. An artificial intelligence model may be generated by machine learning. Such learning may be performed, e.g., by the electronic device 1601 where the artificial intelligence is performed or via a separate server (e.g., the server 1608). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1630 may store various data used by at least one component (e.g., the processor 1620 or the sensor module 1676) of the electronic device 1601. The various data may include, for example, software (e.g., the program 1640) and input data or output data for a command related thereto. The memory 1630 may include the volatile memory 1632 or the non-volatile memory 1634.

The program 1640 may be stored in the memory 1630 as software, and may include, for example, an operating system (OS) 1642, middleware 1644, or an application 1646.

The input module 1650 may receive a command or data to be used by another component (e.g., the processor 1620) of the electronic device 1601, from the outside (e.g., a user) of the electronic device 1601. The input module 1650 may include, for example, a microphone, a mouse, a keyboard, a key (e.g., a button), or a digital pen (e.g., a stylus pen).

The sound output module 1655 may output sound signals to the outside of the electronic device 1601. The sound output module 1655 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1660 may visually provide information to the outside (e.g., a user) of the electronic device 1601. The display module 1660 may include, for example, a display, a hologram device, or a projector and control circuitry to control a corresponding one of the display, hologram device, and projector. According to an embodiment, the display module 1660 may include a touch sensor adapted to detect a touch, or a pressure sensor adapted to measure the intensity of force incurred by the touch.

The audio module 1670 may convert a sound into an electrical signal and vice versa. According to an embodiment, the audio module 1670 may obtain the sound via the input module 1650, or output the sound via the sound output module 1655 or a headphone of an external electronic device (e.g., an electronic device 1602) directly (e.g., wiredly) or wirelessly coupled with the electronic device 1601.

The sensor module 1676 may detect an operational state (e.g., power or temperature) of the electronic device 1601 or an environmental state (e.g., a state of a user) external to the electronic device 1601, and then generate an electrical signal or data value corresponding to the detected state. According to an embodiment, the sensor module 1676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1677 may support one or more specified protocols to be used for the electronic device 1601 to be coupled with the external electronic device (e.g., the electronic device 1602) directly (e.g., wiredly) or wirelessly. According to an embodiment, the interface 1677 may include, for example, a high definition multimedia interface (HDMI), a universal serial bus (USB) interface, a secure digital (SD) card interface, or an audio interface.

A connecting terminal 1678 may include a connector via which the electronic device 1601 may be physically connected with the external electronic device (e.g., the electronic device 1602). According to an embodiment, the connecting terminal 1678 may include, for example, an HDMI connector, a USB connector, an SD card connector, or an audio connector (e.g., a headphone connector).

The haptic module 1679 may convert an electrical signal into a mechanical stimulus (e.g., a vibration or a movement) or electrical stimulus which may be recognized by a user via his tactile sensation or kinesthetic sensation. According to an embodiment, the haptic module 1679 may include, for example, a motor, a piezoelectric element, or an electric stimulator.

The camera module 1680 may capture a still image or moving images. According to an embodiment, the camera module 1680 may include one or more lenses, image sensors, image signal processors, or flashes.

The power management module 1688 may manage power supplied to the electronic device 1601. According to an embodiment, the power management module 1688 may be implemented as at least part of, for example, a power management integrated circuit (PMIC).

The battery 1689 may supply power to at least one component of the electronic device 1601. According to an embodiment, the battery 1689 may include, for example, a primary cell which is not rechargeable, a secondary cell which is rechargeable, or a fuel cell.

The communication module 1690 may support establishing a direct (e.g., wired) communication channel or a wireless communication channel between the electronic device 1601 and the external electronic device (e.g., the electronic device 1602, the electronic device 1604, or the server 1608) and performing communication via the established communication channel. The communication module 1690 may include one or more communication processors that are operable independently from the processor 1620 (e.g., the application processor (AP)) and supports a direct (e.g., wired) communication or a wireless communication. According to an embodiment, the communication module 1690 may include a wireless communication module 1692 (e.g., a cellular communication module, a short-range wireless communication module, or a global navigation satellite system (GNSS) communication module) or a wired communication module 1694 (e.g., a local area network (LAN) communication module or a power line communication (PLC) module). A corresponding one of these communication modules may communicate with the external electronic device via the first network 1698 (e.g., a short-range communication network, such as Bluetooth^{™}, wireless-fidelity (Wi-Fi) direct, or infrared data association (IrDA)) or the second network 1699 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1692 may identify and authenticate the electronic device 1601 in a communication network, such as the first network 1698 or the second network 1699, using subscriber information (e.g., international mobile subscriber identity (IMSI)) stored in the subscriber identification module 1696.

The wireless communication module 1692 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1692 may support a high-frequency band (e.g., the mmWave band) to achieve, e.g., a high data transmission rate. The wireless communication module 1692 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1692 may support various requirements specified in the electronic device 1601, an external electronic device (e.g., the electronic device 1604), or a network system (e.g., the second network 1699). According to an embodiment, the wireless communication module 1692 may support a peak data rate (e.g., 20Gbps or more) for implementing eMBB, loss coverage (e.g., 1664dB or less) for implementing mMTC, or U-plane latency (e.g., 0.5ms or less for each of downlink (DL) and uplink (UL), or a round trip of 16ms or less) for implementing URLLC.

The antenna module 1697 may transmit or receive a signal or power to or from the outside (e.g., the external electronic device) of the electronic device 1601. According to an embodiment, the antenna module 1697 may include an antenna including a radiating element composed of a conductive material or a conductive pattern formed in or on a substrate (e.g., a printed circuit board (PCB)). According to an embodiment, the antenna module 1697 may include a plurality of antennas (e.g., array antennas). In such a case, at least one antenna appropriate for a communication scheme used in the communication network, such as the first network 1698 or the second network 1699, may be selected, for example, by the communication module 1690 (e.g., the wireless communication module 1692) from the plurality of antennas. The signal or the power may then be transmitted or received between the communication module 1690 and the external electronic device via the selected at least one antenna. According to an embodiment, another component (e.g., a radio frequency integrated circuit (RFIC)) other than the radiating element may be additionally formed as part of the antenna module 1697.

According to various embodiments, the antenna module 1697 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1601 and the external electronic device 1604 via the server 1608 coupled with the second network 1699. Each of the electronic devices 1602 or 1604 may be a device of a same type as, or a different type, from the electronic device 1601. According to an embodiment, all or some of operations to be executed at the electronic device 1601 may be executed at one or more of the external electronic devices 1602, 1604, or 1608. For example, if the electronic device 1601 should perform a function or a service automatically, or in response to a request from a user or another device, the electronic device 1601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1601. The electronic device 1601 may provide the outcome, with or without further processing of the outcome, as at least part of a reply to the request. To that end, a cloud computing, distributed computing, mobile edge computing (MEC), or client-server computing technology may be used, for example. The electronic device 1601 may provide ultra low-latency services using, e.g., distributed computing or mobile edge computing. In another embodiment, the external electronic device 1604 may include an internet-of-things (IoT) device. The server 1608 may be an intelligent server using machine learning and/or a neural network. According to an embodiment, the external electronic device 1604 or the server 1608 may be included in the second network 1699. The electronic device 1601 may be applied to intelligent services (e.g., smart home, smart city, smart car, or healthcare) based on 5G communication technology or IoT-related technology.

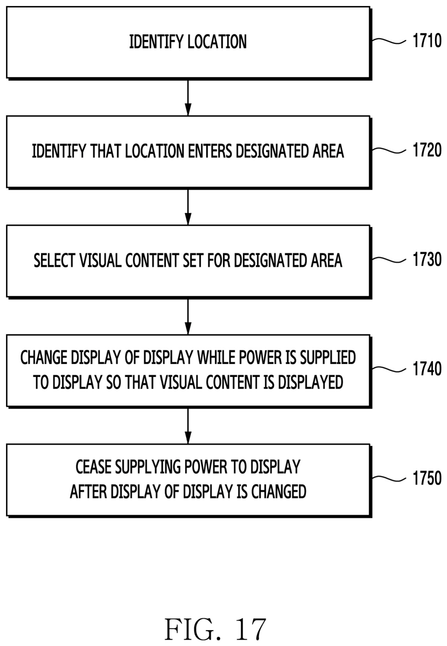

FIG. 17 is a flowchart indicating an operation of an electronic device according to an embodiment.

Referring to FIG. 17, in operation 1710, an electronic device 101 may identify a location of the electronic device 101. In an embodiment, the electronic device 101 may identify the location of the electronic device 101 through a sensor module 1676.

In operation 1720, the electronic device 101 may identify that the electronic device 101 enters a designated area. In an embodiment, the electronic device 101 may identify that the electronic device 101 enters the designated area based on the location of the electronic device 101. In an embodiment, the designated area may include an area of a specific building (e.g., a building, or a station), and/or an area of a specific region (an airport). However, it is not limited thereto. For example, the designated area may include a company and an area around the company.

In operation 1730, the electronic device 101 may select visual content set for the designated area. For example, the visual content may indicate an ID, an employee ID, a ticket (e.g., an airplane ticket, or an admission ticket), and/or a license. For example, the visual content may include code information (e.g., a QR code, and/or a barcode). For example, the visual content may be referred to as media content.

In an embodiment, the visual content may be obtained from a server 190. In an embodiment, the visual content may be in a state that pre-stored in memory 130 in an encrypted state. In an embodiment, a decryption key for decoding the visual content in the encrypted state may be stored in a secure element 131. In an embodiment, the decryption key may be accessed based on a user input (e.g., biometric data, or a password) for authenticating a user. For example, the decryption key may be accessed based on the user being authenticated.

In operation 1740, the electronic device 101 may change display of an electronic paper display 150-1 while power is supplied to the electronic paper display 150-1 so that the visual content is displayed. For example, the electronic device 101 may supply the power to the electronic paper display 150-1 through a power management module 1688 (or a power management integrated circuit (PMIC)). For example, the electronic device 101 may resume power supply to the electronic paper display 150-1 in a state where the power supply is ceased through the power management module 1688 (or the PMIC). In an embodiment, the electronic device 101 may control the electronic paper display 150-1 while the power is supplied to the electronic paper display 150-1 through the power management module 1688 (or the PMIC). For example, the electronic device 101 may control the electronic paper display 150-1 so that the electronic paper display 150-1 displays the visual content while the power is supplied to the electronic paper display 150-1.

In operation 1750, the electronic device 101 may cease supplying the power to the electronic paper display 150-1 after the display of the electronic paper display 150-1 is changed. In an embodiment, the electronic device 101 may cease supplying the power to the electronic paper display 150-1 through the power management module 1688 (or the PMIC) in response to the electronic paper display 150-1 displaying the visual content. In an embodiment, the electronic paper display 150-1 may maintain the display of the visual content while the power is not supplied through the power management module 1688 (or the PMIC).

According to an embodiment, the electronic device 101 may display the previously displayed visual content again through the electronic paper display 150-1 based on the electronic device 101 being out of the designated area. For example, the electronic device 101 may change the display of the electronic paper display 150-1 while the power is supplied to the electronic paper display 150-1 to display the previous visual content based on the electronic device 101 being out of the designated area. The electronic device 101 may cease supplying the power to the electronic paper display 150-1 after the electronic paper display 150-1 is changed to display the previous visual content.

According to an embodiment, the electronic device 101 may display the visual content through the electronic paper display 150-1 based on the electronic device 101 entering the designated area for a designated period. In an embodiment, the designated period may be an effective period of the visual content.

According to an embodiment, the electronic device 101 may identify a state of charge (SOC) of a battery while the electronic device 101 enters the designated area. In an embodiment, the electronic device 101 may control the PMIC to supply the power to the electronic paper display 150-1, which is a state where the power supply is ceased, to change the display of the visual content, based on the SOC being less than a designated SOC. In an embodiment, the electronic device 101 may control the electronic paper display 150-1 to change the display of the visual content through the electronic paper display 150-1 while the power is supplied to the electronic paper display 150-1. In an embodiment, the electronic device 101 may cause the PMIC to control to cease supplying the power to the electronic paper display 150-1 while the visual content is not displayed on the electronic paper display 150-1. In an embodiment, the designated SOC may be a reference SOC converted into a low power operation. In an embodiment, the designated SOC may be a reference SOC in which the electronic device 101 is shut down.

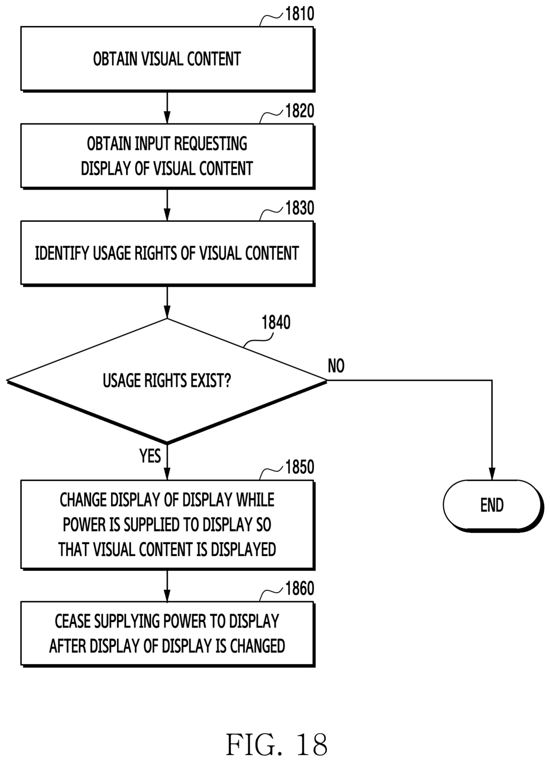

FIG. 18 is a flowchart indicating an operation of an electronic device according to an embodiment.

Referring to FIG. 18, in operation 1810, an electronic device 101 may obtain visual content. The electronic device 101 may obtain the visual content from a server 190 through communication circuitry 170. For example, the electronic device 101 may request the visual content from the server 190 through an application capable of communicating with the server 190. In an embodiment, the electronic device 101 may obtain the visual content from the server 190 in response to the request for the visual content.

In an embodiment, the electronic device 101 may obtain metadata indicating usage rights of the visual content together with the visual content from the server 190. The metadata may include information indicating rights of the visual content, a period of use, the number of uses, and/or whether it is transferable. In an embodiment, the electronic device 101 may obtain a decryption key for decoding the visual content together with the visual content from the server 190. However, it is not limited thereto. In a case that the visual content is encrypted based on a public key of a user of the electronic device 101, the decryption key may be a secret key of the user of the electronic device 101. For example, the secret key (or the decryption key) may be stored in a secure element 131.

In operation 1820, the electronic device 101 may obtain an input requesting display of the visual content. In an embodiment, the electronic device 101 may obtain an input requesting to display the visual content on an electronic paper display 150-1.

In operation 1830, the electronic device 101 may identify the usage rights of the visual content. In an embodiment, the electronic device 101 may identify rights (e.g., ownership) of an image 310 (or a subject included in the image) based on obtaining the input requesting the display of the visual content. For example, electronic device 101 may identify the usage rights of the visual content based on metadata for the visual content.

In operation 1840, the electronic device 101 may determine whether the usage rights exist.

In operation 1840, based on the user of the electronic device 101 having the usage rights for the visual content, the electronic device 101 may perform operation 1850. In operation 1840, based on the user of the electronic device 101 not having the usage rights for the visual content, the electronic device 101 may terminate the operation according to FIG. 18.

In operation 1850, the electronic device 101 may change display of the electronic paper display 150-1 while power is supplied to the electronic paper display 150-1 so that the visual content is displayed. For example, the electronic device 101 may supply the power to the electronic paper display 150-1 through a power management module 1688 (or a power management integrated circuit (PMIC)). For example, the electronic device 101 may resume the power supply to the electronic paper display 150-1 in a state that the power supply is ceased through the power management module 1688 (or the PMIC). In an embodiment, the electronic device 101 may control the electronic paper display 150-1 while the power is supplied to the electronic paper display 150-1 through the power management module 1688 (or the PMIC). For example, the electronic device 101 may control the electronic paper display 150-1 so that the electronic paper display 150-1 displays the visual content while the power is supplied to the electronic paper display 150-1.

In an embodiment, the electronic device 101 may decode the visual content based on the decryption key stored in the secure element 131 based on the user of the electronic device 101 having the usage rights for the visual content. In an embodiment, the electronic device 101 may control the electronic paper display 150-1 so that the electronic paper display 150-1 displays the decoded visual content while the power is supplied to the electronic paper display 150-1.

In operation 1860, the electronic device 101 may cease supplying the power to the electronic paper display 150-1 after the display of the electronic paper display 150-1 is changed. In an embodiment, the electronic device 101 may cease supplying the power to the electronic paper display 150-1 through the power management module 1688 (or the PMIC) in response to the electronic paper display 150-1 displaying the visual content. In an embodiment, the electronic paper display 150-1 may maintain the display of the visual content while the power is not supplied through the power management module 1688 (or the PMIC).

According to an embodiment, the electronic device 101 may display the previously displayed visual content again through the electronic paper display 150-1 based on the electronic device 101 being out of a designated area. For example, the electronic device 101 may change the display of the electronic paper display 150-1 while the power is supplied to the electronic paper display 150-1 to display the previous visual content based on the electronic device 101 being out of the designated area. The electronic device 101 may cease supplying the power to the electronic paper display 150-1 after the electronic paper display 150-1 is changed to display the previous visual content.

According to an embodiment, the electronic device 101 may display the visual content through the electronic paper display 150-1 based on the electronic device 101 entering the designated area for a designated period. In an embodiment, the designated period may be an effective period of the visual content.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1640) including one or more instructions that are stored in a storage medium (e.g., internal memory 1636 or external memory 1638) that is readable by a machine (e.g., the electronic device 1601). For example, a processor (e.g., the processor 1620) of the machine (e.g., the electronic device 1601) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

An electronic device according to an embodiment may determine whether to transmit media content to be displayed on an electronic paper display to an external electronic device by communicating with a server. The electronic device may determine whether to transmit the media content to the external electronic device, based on identifying rights for the media content, by communicating with the server. A method may be required for the electronic device to identify the rights for the media content by communicating with the server.

As described above, in an electronic device 101 according to an embodiment, the electronic device may comprise a housing including a first side and a second side opposite to the first side, a first display 105-2 disposed on the first side, a second display 105-1 disposed on the second side, communication circuitry 170, memory 130 including one or more storage media storing instructions, and at least one processor 120, wherein the instructions, when executed by the at least one processor, individually or collectively, cause the electronic device to display media content 515 on the second display. The instructions, when executed by the at least one processor, individually or collectively, may cause the electronic device to identify an input for transmitting the media content to a first external electronic device 701 through the communication circuitry. The instructions, when executed by the at least one processor, individually or collectively, may cause the electronic device to, in a case of including first metadata 715-1 indicating that the media content is linked to a second external electronic device 190, in response to identifying the input, obtain data for transmission of the media content by communicating with the second external electronic device. The instructions, when executed by the at least one processor, individually or collectively, may cause the electronic device to determine whether to transmit the media content to the first external electronic device based on the data.

For example, the instructions, when executed by the at least one processor, individually or collectively, may cause the electronic device to, in a case of including second metadata 715-2 indicating that the media content is linked to the electronic device, in response to identifying the input, to the first external electronic device, together with third metadata 715-3 indicating allowance of access among the access or editing for the media content, transmit the media content based on a digital rights management (DRM) set by using an secure element 131 stored in the memory.

For example, the instructions, when executed by the at least one processor, individually or collectively, may cause the electronic device to, using a user interface 510, obtain the media content including the second metadata indicating that it is linked to the electronic device. The instructions, when executed by the at least one processor, individually or collectively, may cause the electronic device to, while obtaining the media content 505, initialize display of other media content 505 using the second display. The instructions, when executed by the at least one processor, individually or collectively, may cause the electronic device to, after initializing the display of the other media content, display the obtained media content on the second display.

For example, the electronic device may further comprise a camera 140. The instructions, when executed by the at least one processor, individually or collectively, may cause the electronic device to, in a case of including the second metadata indicating that the media content is linked to the electronic device, display the media content, which indicates at least a part of image data obtained by using the camera, on the second display.

For example, the instructions, when executed by the at least one processor, individually or collectively, may cause the electronic device to transmit the image data obtained by using the camera, to the second external electronic device, using the communication circuitry. The instructions, when executed by the at least one processor, individually or collectively, may cause the electronic device to, based on receiving the media content indicating the at least a part of the image data, from the second external electronic device, display the media content on the second display.

For example, the instructions, when executed by the at least one processor, individually or collectively, may cause the electronic device to, in a case of including the first metadata indicating that the media content is linked to the second external electronic device, from the second external electronic device, in response to receiving the media content based on the digital rights management (DRM), display the media content, on the second display.

For example, the instructions, when executed by the at least one processor, individually or collectively, may cause the electronic device to, after displaying the media content on the second display, temporarily refrain from transmitting a power signal to the second display.

For example, the instructions, when executed by the at least one processor, individually or collectively, may cause the electronic device to, after boot up of the electronic device is completed, identify an account of a first user connected to the electronic device. The instructions, when executed by the at least one processor, individually or collectively, may cause the electronic device to, based on identifying the account of the first user, display the media content, which includes the second metadata indicating identification information of the electronic device, on the second display.

As described above, in an electronic device 101 according to an embodiment, the electronic device may comprise a first housing 161 including a first side and a second side opposite to the first side, a first display 105-2 disposed on the first side, a second display 105-1 disposed on the second side, communication circuitry 170, memory 130 for storing instructions, and a processor 120. The instructions, when executed by the at least one processor, individually or collectively, may cause the electronic device to, after displaying the media content 515 on the second display, while temporarily refraining from transmitting the power signal to the second display, identify a contact between at least a portion of the electronic device and at least a portion of an external electronic device 701. The instructions, when executed by the at least one processor, individually or collectively, may cause the electronic device to, based on identifying the contact between the at least a portion of the electronic device and the at least a portion of the external electronic device, from the external electronic device, using the communication circuitry, receive a signal requesting display of the media content on at least one display of the external electronic device. The instructions, when executed by the at least one processor, individually or collectively, may cause the electronic device to, based on receiving the signal, encrypt the media content, using a secure element 131 stored in the memory, to transmit the media content to the external electronic device. The instructions, when executed by the at least one processor, individually or collectively, may cause the electronic device to, through the communication circuitry, transmit the encrypted media content to the external electronic device.

For example, the encrypted media content may include third metadata 715-3 indicating that allowance of access among the access or editing for the media content and indicating that access of another external electronic device distinguished from the external electronic devices is controlled.

For example, the instructions, when executed by the at least one processor, individually or collectively, may cause the electronic device to, before displaying the media content on the second display, using a user interface 510, obtain the media content including the second metadata indicating that it is linked to the electronic device. The processor may cause, when the instructions are executed, to initialize display of other media content 505 using the second display while obtaining the media content. The instructions, when executed by the at least one processor, individually or collectively, may cause the electronic device to, after initializing the display of the other media content, display the obtained media content on the second display.

For example, the electronic device may further comprise a camera 140. The instructions, when executed by the at least one processor, individually or collectively, may cause the electronic device to, in a case of including the second metadata indicating that the media content is linked to the electronic device, display the media content, which indicates at least a part of image data obtained by using the camera, on the second display.

For example, the instructions, when executed by the at least one processor, individually or collectively, may cause the electronic device to, using the communication circuitry, transmit the image data obtained by using the camera, to another electronic device 190 distinguished from the external electronic device. The instructions, when executed by the at least one processor, individually or collectively, may cause the electronic device to, based on receiving the media content, which indicates the at least a part of the image data, from the other external electronic device, display the media content on the second display.

For example, the instructions, when executed by the at least one processor, individually or collectively, may cause the electronic device to display the media content related to other media content 1015-1 or 1015-2 displayed on at least one of the first display or the second display on the second display.

For example, the media content may be displayed on the second display independently of temporarily refraining from the power signal transmitted to the second display. The encrypted media content may be displayed on the at least one display of the external electronic device, based on transmission to the external electronic device.

As described above, in a method performed by an electronic device 101 according to an embodiment, the method may comprise displaying media content 515 on a second display 150-1. The method may comprise identifying an input for transmitting the media content to a first external electronic device 701 through communication circuitry 170. The method may comprise, in a case of including first metadata 715-1 indicating that the media content is linked to a second external electronic device 190, in response to identifying the input, obtaining data for transmission of the media content by communicating with the second external electronic device. The method may comprise determining whether to transmit the media content to the first external electronic device based on the data.

For example, the method may comprise, in a case of including second metadata 715-2 indicating that the media content is linked to the electronic device, in response to identifying the input, to the first external electronic device, together with third metadata 715-3 indicating allowance of access among the access or editing for the media content, transmitting the media content based on a digital rights management (DRM) set by using an secure element 131 stored in memory.

For example, the method may comprise, using a user interface 510, obtaining the media content including the second metadata indicating that it is linked to the electronic device. The method may comprise, while obtaining the media content 505, initializing display of other media content 505 using the second display. The method may comprise, after initializing the display of the other media content, displaying the obtained media content on the second display.

For example, the method may comprise, in a case of including the second metadata indicating that the media content is linked to the electronic device, displaying the media content, which indicates at least a part of image data obtained by using a camera 140, on the second display.

For example, the method may comprise, using the communication circuitry, transmitting the image data obtained by using the camera, to the second external electronic device. The method may comprise, based on receiving the media content, which indicates the at least a part of the image data, from the second external electronic device, displaying the media content on the second display.

As described above, in a computer-readable storage medium in which one or more programs according to an embodiment are stored, the one or more programs, when executed by a processor 120 of an electronic device 101, may be configured to include instructions that cause the electronic device to display media content 515 on an electronic paper display 150-1. The one or more programs, when executed by the processor of the electronic device, may be configured to include instructions that cause the electronic device to identify an input for transmitting the media content to a first external electronic device 701 through communication circuitry 170. The one or more programs, when executed by the processor of the electronic device, may be configured to include instructions that cause the electronic device to, while including metadata 715-2 indicating that the media content is linked to the electronic device, in response to identifying the input, to the first external electronic device, together with metadata indicating that access is allowed among the access or editing for the media content, transmit the media content. The one or more programs, when executed by the processor of the electronic device, may be configured to include instructions that cause the electronic device to, while including metadata 715-1 indicating that the media content is linked to a second external electronic device 190, in response to identifying the input, by communicating with the second external electronic device, obtain data for transmission of the media content. The one or more programs, when executed by the processor of the electronic device, may be configured to include instructions that cause the electronic device to determine whether to transmit the media content to the first external electronic device based on the data.

As described above, in a computer-readable storage medium storing one or more programs according to an embodiment, the one or more programs, when executed by a processor 120 of an electronic device 101, may be configured to include instructions that cause the electronic device to, after displaying media content 515 on an electronic paper display 150-1, while temporarily refraining from transmitting a power signal transmitted to the electronic paper display, identify a contact between at least a portion of the electronic device and at least a portion of an external electronic device 701. The one or more programs, when executed by the processor of the electronic device, may be configured to include instructions that cause the electronic device to, based on identifying the contact between the at least a portion of the electronic device and the at least a portion of the external electronic device, using communication circuitry 170, receive a signal requesting display of the media content on another electronic paper display of the external electronic device corresponding to the electronic paper display. The one or more programs, when executed by the processor of the electronic device, may be configured to include instructions that cause the electronic device to, based on receiving the signal, encrypt the media content, using a secure element 131 stored in the memory, to transmit the media content to the external electronic device. The one or more programs, when executed by the processor of the electronic device, may be configured to include instructions that cause the electronic device to, through the communication circuitry, transmit the encrypted media content to the external electronic device.

As described above, an electronic device 101 may comprise a housing 161, a first display 150-2 disposed on a front side of the housing, a second display 150-1 disposed on an area of a rear side of the housing, communication circuitry 170, and a secure element 131, memory 130, including instructions, including one or more storage media, and at least one processor 120 including processing circuitry. The instructions, when executed by the at least one processor, individually or collectively, may cause the electronic device to, based on identifying an event, transmit data indicating to request display of media content 515, to a server 190 through the communication circuitry 170. The instructions, when executed by the at least one processor, individually or collectively, may cause the electronic device to, from the server 190 through the communication circuitry 170, receive the media content 515 linked to a user account of the electronic device 101 and metadata indicating information about rights of the media content 515. The instructions, when executed by the at least one processor, individually or collectively, may cause the electronic device to, based on the information about the rights of the metadata indicating that a user of the electronic device has the rights for the media content, decode the media content 515 based on a decryption key stored in the secure element. The instructions, when executed by the at least one processor, individually or collectively, may cause the electronic device to display the decoded media content 515 on the second display.

The instructions, when executed by the at least one processor, individually or collectively, may cause the electronic device to identify a request to transmit the media content to an external electronic device 701 through the communication circuitry. The instructions, when executed by the at least one processor, individually or collectively, may cause the electronic device to, in a case of indicating that the metadata of the media content is linked to the server 190, in response to identifying the transmission request, request allowance of transmission of the media content, to the server. The instructions, when executed by the at least one processor, individually or collectively, may cause the electronic device to, based on receiving data indicating that the transmission of the media content is allowed, transmit the media content to the external electronic device.

The instructions, when executed by the at least one processor, individually or collectively, may cause the electronic device to, in a case of indicating that the metadata of the media content is linked to the electronic device, in response to identifying the transmission request, to the external electronic device, together with the metadata indicating allowance of access among the access or editing for the media content, transmit the media content based on a digital rights management (DRM) set by using the secure element 131.

The instructions, when executed by the at least one processor, individually or collectively, may cause the electronic device to, in a case of including the metadata indicating the media content is linked to the electronic device, display the media content indicating at least a part of image data obtained using the camera, on the second display.

The instructions, when executed by the at least one processor, individually or collectively, may cause the electronic device to, using the communication circuitry, transmit the image data obtained by using the camera, to the server. The instructions, when executed by the at least one processor, individually or collectively, may cause the electronic device to, based on receiving the media content indicating the at least a part of the image data, from the server, display the media content on the second display.

The instructions, when executed by the at least one processor, individually or collectively, may cause the electronic device to, in a case of indicating that the metadata of the media content is linked to the server, from the server, in response to receiving the media content based on the DRM, display the media content on the second display.

The instructions, when executed by the at least one processor, individually or collectively, may cause the electronic device to, after displaying the media content on the second display, temporarily refrain from transmitting a power signal to the second display. While transmission of the power signal to the second display is temporarily refrained, display of the media content on the second display may be maintained.

The instructions, when executed by the at least one processor, individually or collectively, may cause the electronic device to, after boot up of the electronic device is completed, identify an account of a first user of the electronic device connected to the electronic device. The instructions, when executed by the at least one processor, individually or collectively, may cause the electronic device to, based on identifying the account of the first user, display the media content including the metadata indicating identification information of the electronic device, on the second display.

As described above, a method may be performed by an electronic device 101 including a housing 161, a first display 150-2 disposed on a front side of the housing, a second display 150-1 disposed on a rear side of the housing, communication circuitry 170, and a secure element 131. The method may comprise transmitting data indicating to request display of media content 515, to a server 190, through the communication circuitry 170. The method may comprise, from the server 190 through the communicating circuitry 170, receiving the media content 515 linked to a user account of the electronic device 101 and metadata indicating information about rights of the media content 515. The method may comprise, based on the information about the rights of the metadata indicating that a user of the electronic device has the rights for the media content, decoding the media content 515 based on a decryption key stored in the secure element. The method may comprise displaying the decoded media content 515 on the second display.

The method may comprise identifying a request to transmit the media content to an external electronic device 701 through the communication circuitry. The method may comprise, in a case of indicating that the metadata of the media content is linked to the server 190, in response to identifying the transmission request, requesting allowance of transmission of the media content, to the server. The method may comprise, based on receiving data indicating that the transmission of the media content is allowed, transmitting the media content to the external electronic device.

The method may comprise, in a case of indicating that the metadata of the media content is linked to the electronic device, in response to identifying the transmission request, to the external electronic device, together with the metadata indicating allowance of access among the access or editing for the media content, transmitting the media content based on a digital rights management (DRM) set by using the secure element 131.

The method may comprise, while including second metadata indicating that the media content is linked to the electronic device, displaying the media content indicating at least a part of image data obtained by using a camera 140 on the second display.

The method may comprise, using the communication circuitry, transmitting the image data obtained by using the camera, to the server. The method may comprise, based on receiving the media content indicating the at least a part of the image data, from the server, displaying the media content on the second display.

As described above, an electronic device 101 may comprise a housing 161, a first display 150-2 disposed on a front side of the housing, a second display 150-1 disposed on an area of a rear side of the housing, and a secure element 131, memory 130, including instructions, including one or more storage media, and at least one processor 120 including processing circuitry. The instructions, when executed by the at least one processor, individually or collectively, may cause the electronic device to, based on a location of the electronic device, identify that the electronic device enters a designated area. The instructions, when executed by the at least one processor, individually or collectively, may cause the electronic device to, based on identifying that the electronic device enters the designated area, identify encrypted media content 1420 to be displayed on the second display. The instructions, when executed by the at least one processor, individually or collectively, may cause the electronic device to obtain a user input for authenticating a user. The instructions, when executed by the at least one processor, individually or collectively, may cause the electronic device to, based on the user being authenticated through the user input, access a decryption key stored in the secure element for decoding the encrypted media content 1420. The instructions, when executed by the at least one processor, individually or collectively, may cause the electronic device to, based on the decryption key, display the decoded media content 1420 on the second display.

The instructions, when executed by the at least one processor, individually or collectively, may cause the electronic device to, based on the location of the electronic device, identify that the electronic device is out of the designated area. The instructions, when executed by the at least one processor, individually or collectively, may cause the electronic device to, based on identifying that the electronic device is out of the designated area, identify the previously displayed media content 1410. The instructions, when executed by the at least one processor, individually or collectively, may cause the electronic device to, display the identified media content 1410 on the second display without the user input for authenticating the user.

As described above, an electronic device 101 may further include communication circuitry 170. The instructions, when executed by the at least one processor, individually or collectively, may cause the electronic device to, based on identifying that the electronic device enters the designated area, request the encrypted media content 1420 from the server 190 through the communication circuitry. The instructions, when executed by the at least one processor, individually or collectively, may cause the electronic device to receive the media content 1420 linked to a user account of the user from the server 190 through the communication circuitry 170.

The instructions, when executed by the at least one processor, individually or collectively, may cause the electronic device to identify a request to transmit the media content to an external electronic device 701 through the communication circuitry. The instructions, when executed by the at least one processor, individually or collectively, may cause the electronic device to, in a case of indicating that the metadata of the media content is linked to the server 190, in response to identifying the transmission request, request allowance of transmission of the media content, to the server. The instructions, when executed by the at least one processor, individually or collectively, may cause the electronic device to, based on receiving data indicating that the transmission of the media content is allowed, transmit the media content to the external electronic device. The instructions, when executed by the at least one processor, individually or collectively, may cause the electronic device to, in a case of indicating that the metadata of the media content is linked to the electronic device, in response to identifying the transmission request, to the external electronic device, together with the metadata indicating allowance of access among the access or editing for the media content, transmit the media content based on a digital rights management (DRM) set by using the secure element 131.

As described above, a method may be performed by an electronic device 101 including a housing 161, a first display 150-2 disposed on a front side of the housing, a second display 150-1 disposed on a rear side of the housing, communication circuitry 170, and a secure element 131. The method may comprise, based on a location of the electronic device, identifying that the electronic device enters a designated area. The method may comprise, based on identifying that the electronic device enters the designated area, identifying encrypted media content 1420 to be displayed on the second display at the designated area. The method may comprise obtaining a user input for authenticating a user. The method may comprise, based on the user being authenticated through the user input, accessing a decryption key stored in the secure element for decoding the encrypted media content 1420. The method may comprise, based on the decryption key, displaying the decoded media content 1420 on the second display.

The method may comprise, based on the location of the electronic device, identifying that the electronic device is out of the designated area. The method may comprise, based on identifying that the electronic device is out of the designated area, identifying the previously displayed media content 1410. The method may comprise displaying the identified media content 1410 on the second display.

The method may comprise, based on identifying that the electronic device enters the designated area, requesting the encrypted media content 1420 from the server 190 through the communication circuitry. The method may comprise receiving the media content 1420 linked to the user account of the user from the server 190 through the communication circuitry 170.

The method may comprise identifying a request to transmit the media content to an external electronic device 701 through the communication circuitry. The method may comprise, in a case of indicating that the metadata of the media content is linked to the server 190, in response to identifying the transmission request, requesting allowance of transmission of the media content, to the server. The method may comprise, based on receiving data indicating that the transmission of the media content is allowed, transmitting the media content to the external electronic device. The method may comprise, in a case of indicating that the metadata of the media content is linked to the electronic device, in response to identifying the transmission request, to the external electronic device, together with the metadata indicating allowance of access among the access or editing for the media content, transmitting the media content based on a digital rights management (DRM) set by using the secure element 131.

The method may comprise, while including second metadata indicating that the media content is linked to the electronic device, displaying the media content indicating at least a part of image data obtained by using a camera on the second display.

As described above, an electronic device 101 may comprise a housing 161. The electronic device 101 may comprise a first display 150-2 disposed on a front side of the housing. The electronic device 101 may comprise a second display 150-1 disposed on an area of a rear side of the housing. The electronic device 101 may comprise a power management integrated circuit (PMIC) for controlling power supplied to the second display. The electronic device 101 may comprise communication circuitry communicating with a server managing usage rights of content. The electronic device may comprise a secure element (SE) storing information about usage rights of content. The electronic device may comprise memory 130 storing instructions. The electronic device may comprise at least one processor 120. The instructions, when executed by the at least one processor, individually or collectively, may cause the electronic device to obtain information about usage rights of the content in which the usage rights are set from the server via the communication circuitry. The instructions, when executed by the at least one processor, individually or collectively, may cause the electronic device to obtain an input for displaying the content. The instructions, when executed by the at least one processor, individually or collectively, may cause the electronic device to, based on obtaining the input for displaying the content, identify usage rights for the content. The instructions, when executed by the at least one processor, individually or collectively, may cause the electronic device to, in response to identifying that the user has usage rights for the content, control the PMIC to supply power to the second display. The instructions, when executed by the at least one processor, individually or collectively, may cause the electronic device to control the second display to display the content via the second display while the power is supplied. The instructions, when executed by the at least one processor, individually or collectively, may cause the electronic device to, based on display of the content by the second display being completed, control the PMIC to cease supplying power to the second display.

The instructions, when executed by the at least one processor, individually or collectively, may cause the electronic device to identify a request to transmit the media content to an external electronic device 701 through the communication circuitry. The instructions, when executed by the at least one processor, individually or collectively, may cause the electronic device to, in a case of indicating that the metadata of the media content is linked to the server 190, in response to identifying the transmission request, request allowance of transmission of the media content, to the server. The instructions, when executed by the at least one processor, individually or collectively, may cause the electronic device to, based on receiving data indicating that the transmission of the media content is allowed, transmit the media content to the external electronic device. The instructions, when executed by the at least one processor, individually or collectively, may cause the electronic device to, in a case of indicating that the metadata of the media content is linked to the electronic device, in response to identifying the transmission request, to the external electronic device, together with the metadata indicating allowance of access among the access or editing for the media content, transmit the media content based on a digital rights management (DRM) set by using the secure element 131.

As described above, an electronic device 101 may comprise a housing 161. The electronic device 101 may comprise a first display 150-2 disposed on a front side of the housing. The electronic device 101 may comprise a second display 150-1 disposed on an area of a rear side of the housing. The electronic device 101 may comprise a power management integrated circuit (PMIC) for controlling power supplied to the second display. The electronic device 101 may comprise memory 130 storing instructions. The electronic device 101 may comprise at least one processor 120. The instructions, when executed by the at least one processor, individually or collectively, may cause the electronic device to identify a location of the electronic device. The instructions, when executed by the at least one processor, individually or collectively, may cause the electronic device to identify that the identified location of the electronic device enters a designated area. The instructions, when executed by the at least one processor, individually or collectively, may cause the electronic device to, based on identifying that the designated area is entered, select content set for the designated area from among a plurality of contents stored in the memory. The instructions, when executed by the at least one processor, individually or collectively, may cause the electronic device to control the PMIC to supply power to the second display. The instructions, when executed by the at least one processor, individually or collectively, may cause the electronic device to control the second display to display the content via the second display while the power is supplied. The instructions, when executed by the at least one processor, individually or collectively, may cause the electronic device to, based on display of the content by the second display being completed, control the PMIC to cease supplying power to the second display.

The instructions, when executed by the at least one processor, individually or collectively, may cause the electronic device to, based on the location of the electronic device, identify that the electronic device is out of the designated area. The instructions, when executed by the at least one processor, individually or collectively, may cause the electronic device to, based on identifying that the electronic device is out of the designated area, identify the previously displayed content. The instructions, when executed by the at least one processor, individually or collectively, may cause the electronic device to display the identified content on the second display.

The instructions, when executed by the at least one processor, individually or collectively, may cause the electronic device to, based on identifying that the electronic device enters the designated area, request the content to a server 190 via the communication circuitry. The instructions, when executed by the at least one processor, individually or collectively, may cause the electronic device to receive the content linked to a user account of the user from the server 190 via the communication circuitry 170.

The instructions, when executed by the at least one processor, individually or collectively, may cause the electronic device to display the content, which indicates at least a part of image data obtained using the camera, on the second display.

The instructions, when executed by the at least one processor, individually or collectively, may cause the electronic device to, after boot up of the electronic device is completed, identify an account of a first user of the electronic device connected to the electronic device. The instructions, when executed by the at least one processor, individually or collectively, may cause the electronic device to, based on identifying the account of the first user, display the content, which includes metadata indicating identification information of the electronic device, on the second display.

The instructions, when executed by the at least one processor, individually or collectively, may cause the electronic device to identify a state of charge (SOC) of the battery while the electronic device enters the designated area. The instructions, when executed by the at least one processor, individually or collectively, may cause the electronic device to, based on the SOC being less than a designated SOC, control the PMIC to supply power to the second display, which is a state in which the power supply is ceased to change display of the content. The instructions, when executed by the at least one processor, individually or collectively, may cause the electronic device to control the second display to change display of the content via the second display while the power is supplied. The instructions, when executed by the at least one processor, individually or collectively, may cause the electronic device to, based on the content not being displayed on the second display, control the PMIC to cease supplying power to the second display.

As described above, a method may be performed by an electronic device including a housing 161, a first display 150-2 disposed on a front side of the housing, a second display 150-1 disposed on an area of a rear side of the housing, a power management integrated circuit (PMIC) for controlling power supplied to the second display, communication circuitry communicating with a server managing usage rights of content, and a secure element (SE) storing information about usage rights of content. The method may comprise obtaining information about usage rights of the content in which the usage rights are set from the server via the communication circuitry. The method may comprise obtaining an input for displaying the content. The method may comprise, based on obtaining the input for displaying the content, identifying usage rights for the content of a user of the electronic device via the information for the usage rights. The method may comprise, in response to identifying that the user has usage rights for the content, controlling the PMIC to supply power to the second display. The method may comprise controlling the second display to display the content via the second display while the power is supplied. The method may comprise, based on display of the content by the second display being completed, controlling the PMIC to cease supplying power to the second display.

As described above, a method may be performed by an electronic device including a housing 161, a first display 150-2 disposed on a front side of the housing, a second display 150-1 disposed on an area of a rear side of the housing, and a power management integrated circuit (PMIC) for controlling power supply to the second display. The method may comprise identifying a location of the electronic device. The method may comprise identifying that the identified location of the electronic device enters a designated area. The method may comprise, based on identifying that the designated area is entered, selecting content set for the designated area from among a plurality of contents stored in the memory. The method may comprise controlling the PMIC to supply power to the second display, which is in a state where power supply is ceased, to display the content. The method may comprise controlling the second display to display the content via the second display while the power is supplied. The method may comprise, based on display of the content by the second display being completed, controlling the PMIC to cease supplying power to the second display.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

Although the embodiments have been described above with reference to limited examples and drawings, various modifications and variations may be made from the above description by those skilled in the art. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. An electronic device (101) comprising:
a housing (161);
a first display (150-2) disposed on a front side of the housing;
a second display (150-1) disposed on an area of a rear side of the housing;
a power management integrated circuit (PMIC) for controlling power supplied to the second display;
memory (130) storing instructions; and
at least one processor (120),
wherein the instructions, when executed by the at least one processor, individually or collectively, cause the electronic device to:
identify a location of the electronic device;
identify that the identified location of the electronic device enters a designated area;
based on identifying that the designated area is entered, select content set for the designated area from among a plurality of contents stored in the memory;
control the PMIC to supply power to the second display;
control the second display to display the content via the second display while the power is supplied; and
based on display of the content by the second display being completed, control the PMIC to cease supplying power to the second display.

2. The electronic device of claim 1,
wherein the instructions, when executed by the at least one processor, individually or collectively, cause the electronic device to:
based on the location of the electronic device, identify that the electronic device is out of the designated area;
based on identifying that the electronic device is out of the designated area, identify the previously displayed content; and
display the identified content on the second display.

3. The electronic device of claim 1, further comprising:
communication circuitry (170),
wherein the instructions, when executed by the at least one processor, individually or collectively, cause the electronic device to:
based on identifying that the electronic device enters the designated area, request the content to a server (190) via the communication circuitry; and
receive the content linked to a user account of a user from the server (190) via the communication circuitry (170).

4. The electronic device of claim 1, further comprising:
a camera (140), and
wherein the instructions, when executed by the at least one processor, individually or collectively, cause the electronic device to:
display the content, which indicates at least a part of image data obtained using the camera, on the second display.

5. The electronic device of claim 1,
wherein the instructions, when executed by the at least one processor, individually or collectively, cause the electronic device to:
after boot up of the electronic device is completed, identify an account of a first user of the electronic device connected to the electronic device; and
based on identifying the account of the first user, display the content, which includes metadata indicating identification information of the electronic device, on the second display.

6. The electronic device of claim 1, comprising
a battery, and
wherein the instructions, when executed by the at least one processor, individually or collectively, cause the electronic device to:
identify a state of charge (SOC) of the battery while the electronic device enters the designated area;
based on the SOC being less than a designated SOC, control the PMIC to supply power to the second display to change display of the content;
control the second display to change display of the content via the second display while the power is supplied; and
based on the content not being displayed on the second display, control the PMIC to cease supplying power to the second display.

7. The electronic device of claim 1, comprising:
communication circuitry communicating with a server managing usage rights of content; and
a secure element (SE) storing information about usage rights of content, and
wherein the instructions, when executed by the at least one processor, individually or collectively, cause the electronic device to:
obtain information about usage rights of the content set for the designated area from the server via the communication circuitry;
identify usage rights for the content based on the information about the usage rights;
in response to identifying that usage rights for the content exist, control the second display to display the content via the second display; and
based on display of the content by the second display being completed, control the PMIC to cease supplying power to the second display.

8. A method performed by an electronic device (101) including a housing (161), a first display (150-2) disposed on a front side of the housing, a second display (150-1) disposed on an area of a rear side of the housing, and a power management integrated circuit (PMIC) for controlling power supply to the second display, the method comprising:
identifying a location of the electronic device;
identifying that the identified location of the electronic device enters a designated area;
based on identifying that the designated area is entered, selecting content set for the designated area from among a plurality of contents stored in the memory;
controlling the PMIC to supply power to the second display, which is in a state where power supply is ceased, to display the content;
controlling the second display to display the content via the second display while the power is supplied; and
based on display of the content by the second display being completed, controlling the PMIC to cease supplying power to the second display.

9. The method of claim 8, comprising:
based on the location of the electronic device, identifying that the electronic device is out of the designated area;
based on identifying that the electronic device is out of the designated area, identifying the previously displayed content; and
displaying the identified content on the second display.

10. The method of claim 8, comprising:
based on identifying that the electronic device enters the designated area, requesting the content to a server (190) via communication circuitry; and
receiving the content linked to a user account of a user from the server (190) via the communication circuitry (170).

11. The method of claim 8, comprising:
displaying the content, which indicates at least a part of image data obtained using a camera, on the second display.

12. The method of claim 8, comprising:
after boot up of the electronic device is completed, identifying an account of a first user of the electronic device connected to the electronic device; and
based on identifying the account of the first user, displaying the content, which includes metadata indicating identification information of the electronic device, on the second display.

13. The method of claim 8, comprising:
identifying a state of charge (SOC) of a battery while the electronic device enters the designated area;
based on the SOC being less than a designated SOC, controlling the PMIC to supply power to the second display to change display of the content;
controlling the second display to change display of the content via the second display while the power is supplied; and
based on the content not being displayed on the second display, controlling the PMIC to cease supplying power to the second display.

14. The method of claim 8, comprising:
obtaining information about usage rights of the content set for the designated area from a server via communication circuitry;
identifying usage rights for the content based on the information about the usage rights;
in response to identifying that usage rights for the content exist, controlling the second display to display the content via the second display; and
based on display of the content by the second display being completed, controlling the PMIC to cease supplying power to the second display.

15. A non-transitory computer readable recording medium storing a program including instructions, wherein the instructions, when executed by a processor of an electronic device (101) including a housing (161), a first display (150-2) disposed on a front side of the housing, a second display (150-1) disposed on an area of a rear side of the housing, and a power management integrated circuit (PMIC) for controlling power supply to the second display, cause the electronic device to:
identify a location of the electronic device;
identify that the identified location of the electronic device enters a designated area;
based on identifying that the designated area is entered, select content set for the designated area from among a plurality of contents stored in the memory;
control the PMIC to supply power to the second display;
control the second display to display the content via the second display while the power is supplied; and
based on display of the content by the second display being completed, control the PMIC to cease supplying power to the second display.
